# EUROPEAN PATENT SPECIFICATION

(11) **EP 1 849 790 B1**
(45) Date of publication and mention of the grant of the patent: **31.03.2010**
(21) Application number: 07016269.8
(22) Date of filing: 23.07.2001
(51) Int. Cl.: C07F 9/6584, C07F 15/00, C07F 17/02, C07F 9/50

(54) **Method for the preparation of diazaphosphacycles**
Methode zur Herstellung von Diazaphosphacyclen
Méthode pour la préparation de diazaphosphacycles

(43) Date of publication of application: 31.10.2007
(62) Divisional of application: 01959144.5
(73) Proprietor: WISCONSIN ALUMNI RESEARCH FOUNDATION, Madison, WI 53707-7365 (US)
(72) Inventor: Landis, Clark R., Madison WI 53705 (US); Jin, Wiechang, Madison WI 53711 (US); Owen, Jonathan S., Pasadena CA 91125 (US); Clark, Thomas P., Midland MI 48642 (US)
(74) Representative: McCluskie, Gail Wilson

(56) References cited:
- WO-A-91/17998
- WILHELM H ET AL: "ZUR REACTION VON PHOSPHORYL- UND THIOPHOSPHORYLISOTHIOCYANATEN MIT PHOSPHANEN-DIE KRISTALLSTRUKTUR DES (C6H5O)2P(O)-NH-C(S)P(C6H5)2" PHOSPHORUS, SULFUR AND SILICON AND THE RELATED ELEMENTS, GORDON AND BREACH SCIENCE PUBLISHERS, AMSTERDAM, GB, vol. 73, no. 1-4, 1992, pages 81-91, XP008001098 ISSN: 1042-6507
- MAERKL G ET AL: "1,5-Diaza-3-phospha-cycloheptane-N,N'-Bis -[phosphinomethyl]-ethylendi amine mit optisch aktiven Seitenketten" TETRAHEDRON LETTERS, ELSEVIER SCIENCE PUBLISHERS, AMSTERDAM, NL, vol. 21, no. 36, 1980, pages 3467-3470, XP002188900 ISSN: 0040-4039
- BAR-NIR B B-A ET AL: "Addition of borane-protected secondary phosphines to imines. A route to protected mono-N-substituted-alpha-aminophosphines" TETRAHEDRON LETTERS, ELSEVIER SCIENCE PUBLISHERS, AMSTERDAM, NL, vol. 41, no. 32, 5 August 2000 (2000-08-05), pages 6143-6147, XP004243530 ISSN: 0040-4039
- LANDIS C.R. ET AL: "Rapid access to diverse arrays of chiral 3,4-diaza- phospholanes" ANGEWANDTE CHEMIE. INTERNATIONAL EDITION., vol. 40, no. 18, 17 September 2001 (2001-09-17), pages 3432-3434, XP002193427 VERLAG CHEMIE. WEINHEIM., DE ISSN: 0570-0833

## Description

### FIELD OF THE INVENTION

The invention relates generally to diazaphosphacycles and to methods for synthesizing them. The invention also relates to metal complexes that may be formed from the novel diazaphosphacycles and to their use as catalysts.

### BACKGROUND OF THE INVENTION

Phosphines are used as ligands in a large number of known transition metal complexes, and phosphine ligands are included in many transition metal complexes used as catalysts. One of the reasons is that phosphines are known to be one of the best ligands for stabilizing transition metals. Phosphine ligands are often included in transition metal complexes used to catalyze hydroformylation reactions where hydrogen, an alkene, and carbon monoxide are converted to the corresponding aldehyde.

Phosphines are also included as ligands in various transition metal complexes used to catalyze hydrogenation reactions. In many of these reactions, inexpensive phosphines such as triphenylphosphine perform suitably. However, phosphines have also found a niche in more specialized areas such asymmetric hydrogenation and other catalytic transformations. The use of a chiral phosphine allows enantioselectivity in the catalytic reaction, and often high enantiomeric excesses may be achieved when a chiral phosphine is used as a ligand. The use of an enantioselective catalyst allows a desired enantiomer to be produced reducing undesired products while simultaneously reducing separation costs associated with the separation of enantiomers. Enantioselective hydrogenation catalysts may be as fast and selective as some of the best known enzymes, and such catalysts can result in greater than 99.9% production of one enantiomer.

Asymmetric hydrogenation is used to make commercially important products including biologically active compounds such as pesticides and pharmaceuticals. Asymmetric hydrogenation is being used more frequently in the pharmaceutical industry where expensive intermediate compounds are too valuable to waste. One of the first reactions employing a phosphine-containing catalyst in the pharmaceutical industry was the selective production of L-DOPA rather than R-DOPA.

As noted above, chiral phosphine ligands are central to many developments in transition metal-catalyzed enantioselective transformations. R. Noyori, Asymmetric Catalysis; John Wiley: New York, 1994. Recent demonstrations of high enantioselectivity for a wide range of hydrogenation reactions with Rh complexes of the DuPHOS; PennPHOS, RoPHOS, BASPHOS, CnrPHOS, and related ligands highlight the unusual efficacy of rigid phosphacycles. M. J. Burk, J. Am. Chem. Soc. 1991, 113, 8518-8519; M. J. Burk, Chemtracts-Organic Chemistry 1998, 11, 787-802; M. J. Burk, A. Pizzano, J.A. Martin, L.M. Liable-Sands, A.L. Rheingold, Organometallics 2000, 19, 250-260; M.J. Burk, F. Bienewald, S. Challenger, A. Derrick, J.A. Ramsden, J. Org. Chem. 1999, 64, 3290-3298; Z. Zhang, G. Zhu, Q. Jiang, D. Xiao, X. Zhang, J. Org. Chem. 1999, 64, 1774-1775; Q. Jiang, Y. Jiang, D. Xiao, P. Cao, X. Zhang, Angew. Chem. 1998, 110, 1100-1103; Angew. Chem., Int. Ed. Engl 1998, 37, 1100-1103; G. Zhu, P. Cao, Q. Jiang, X. Zhang, J. Am. Chem. Soc. 1997, 119, 1799-1800; Z. Chen. Q. Jiang, G. Zhu, D. Xiao, P. Cao, C. Guo, X. Zhang, J. Org. Chem. 1997, 62, 4521-4523; J. Holz, M. Quirmbach, U. Schmidt, D. Heller, R. Stürmer, A. Börner, J. Org. Chem. 1998, 63, 8031-8034; W. Li, Z. Zhang, D. Xiao, X. Zhang, J. Org. Chem. 2000, 65, 3489-3496; W. Li, Z. Zhang, D. Xiao, X. Zhang, Tetrahedron Lett. 1999, 40, 6701-6704; Y.-Y. Yan, T.V. RajanBabu, J. Org. Chem. 2000, 65, 900-906; J. Holz, D. Heller, R. Stürmer, A. Börner, Tetrahedron Lett. 1999, 40, 7059-7062; A. Marinetti, S. Jus, J.-P. Genet, Tetrahedron Lett. 1999, 40, 8365-8368; A. Marinetti, S. Jus, J.-P. Genêt, L. Ricard, Tetrahedron 2000, 56, 95-100; A. Marinetti, S. Jus, J.-P. Genet, Tetrahedron Lett. 1999, 40, 8365-8368; A. Marinetti, S. Jus, J.-P. Genêt, L. Ricard, Tetrahedron 2000, 56, 95-100.

Although significant efforts have been made to produce transition metal complexes for effecting enantioselective catalytic transformations, one persisting problem associated with chiral phosphine ligands is that they are difficult and expensive to produce, often requiring multi-step syntheses. Both the electron density of the phosphorus atom in phosphines and the size of the phosphine ligand as expressed by cone angles are known to impact the reactivity of metal complexes prepared from them. Therefore, the ability to modify chiral phosphines and determine structure property relationships are important factors in understanding and optimizing catalytic activity. However, the difficulty associated with synthesizing chiral phosphines has prevented the synthesis of libraries of suck compounds for use in analyzing structure property relationships.

One specific group of phosphines, 3,4-diazaphospholanes, are five-membered rings containing two nitrogen atoms, two carbon atoms, and a phosphorus atom as ring members. In 3,4-diazaphospholanes, each of the two carbon atom ring members is bonded to one of the ring nitrogen atoms and the ring phosphorus atom. Very few 3,4-diazaphospholanes have thus far been reported.

Märkl *et al.* have prepared diazaphospholanes by reacting hydrazines with phosphorus compounds having the formula RP(CH₂OH)₂. This synthetic methodology is limited and does not provide any simple route to compounds having groups other than H bonded to the diazaphospholane ring carbon atoms. G. Märkl, G. Y. Jin, Tetrahedron Lett. 1980, 21, 3467-3470; and G. Märkl, G. Y. Jin, Tetrahedron Lett. 1981, 22, 229-232. Arbuzov *et al*. have utilized the same type of methodology to prepare other diazaphosphacycles from RP(CH₂OH)₂. B. A. Arbuzov, O. A. Erastov, G. N. Nikonov, R. P. Arshinova, I.P. Romanova, R A. Kadyrov, Izvestia Akad, Nauk SSSR, Seriya Khimicheskaya, 1993, 8, 1846-1850.

A need remains for chiral phosphines and methods for making them.
A need also remains for transition metal complexes that include chiral phosphines and for transition metal complexes for catalyzing important reactions. A need further remains for libraries of chiral phosphines and transition metal complexes.

### SUMMARY OF THE INVENTION

The present invention provides a method for synthesizing a diazaphosphacycle.

A method of synthesizing a diazaphosphacycle is provided which includes reacting a phosphine with a diimine and optionally one or more equivalents of an acid halide, a sulfonyl halide, a phosphoryl halide, or an acid anhydride in the substantial absence of O₂ to form the diazaphosphacycle. The phosphine has the formula I 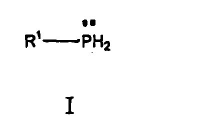 where R¹ is selected from the group consisting of substituted and unsubstituted aryl groups, substituted and unsubstituted alkyl groups, substituted and unsubstituted alkenyl groups, substituted and unsubstituted cycloalkyl groups, and substituted and unsubstituted ferrocenyl groups.

Still other methods for synthesizing a diazaphosphacycle are provided in which the phosphine and the diimine are reacted in the presence of an acid such as hydrochloric acid or hydrobromic acid.

In still other provided methods for synthesizing a diazaphosphacycle, the phosphine and the diimine are reacted in the presence of the acid halide, the sulfonyl halide, the phosphoryl halide, or the acid anhydride.

In still other methods in which the phosphine and the diimine are reacted in the presence of an acid halide, the acid halide is phthaloyl dichloride or phthaloyl dibromide.

Other methods for synthesizing a diazaphosphacycle are provided in which R¹ includes one or more -PH₂ group such that the phosphine is a polyphosphine. In still other such methods, the polyphosphine is selected from 1,2-diphosphinoethane, 1,2-diphosphinoethylene, 1,3-diphosphinopropane, substituted or unsubstituted 1,2-diphosphinobenzene groups, substituted or unsubstituted 1,8-diphosphinoanthracene groups, substituted or unsubstituted 1,8-diphosphino-9,10-dihydroanthracene groups, substituted or unsubstituted 1,8-diphosphinoxanthene groups, or 1,1'-diphosphinoferrocene groups.

Still other method for synthesizing diazaphosphacycles are provided in which the phosphine, the diimine, and optionally the acid halide are reacted in a substantially deoxygenated solvent such as ether, an alcohol, water, dichloroethane, or combinations of these.

A collection of different diazaphosphacycles of the present invention may be included in combinatorial libraries.

A diazaphosphacycle according to the invention and a transition metal may be included in transition metal complexes where the phosphorus atom of the diazaphosphacycle is bonded to the transition metal. The transition metal may be selected from of Rh, Ru, Pd, Pt, Ir, Ni, Co, or Fe. The transition metal complex may have catalytic activity, and may be used in a method for catalyzing a chemical reaction. Furthermore, a collection of different transition metal complexes that include the diazaphosphacycles of the present invention, may be used to provide libraries of transition metal complexes.

Methods for synthesizing the diazaphosphacycle transition metal way include reacting a diazaphosphacycle prepared according to the present invention with a starting transition metal complex to produce the diazaphosphacycle transition metal complex. The starting transition metal complex includes at least one ligand that is replaced by the diazaphosphacycle.

Other methods for synthesizing a diazaphosphacycle transition metal complex include those in which the ligand replaced by the diazaphosphacycle is selected from phosphines; amines; diamines; CO; Cl; Br; nitriles; 1,5-cyclooctadiene, norbomadiene, and other dienes; alkenes; arenes; ketones; alcohols; ethers; thiols; or sulfoxides.

Further objects, features and advantages of the invention will be apparent from the following detailed description when taken in conjunction with the accompanying drawings.

### BRIEF DESCRIPTION OF THE DRAWINGS

FIG. 1 is an X-ray crystal structure ORTEP diagram of *rac*-6e with the displacement ellipsoids drawn at the 50% probability level.
FIG. 2 is an X-ray crystal structure of *rac*-8. The ORTEP diagram is drawn with 30% probability ellipsoids. Solvent molecules and hydrogens have been removed for clarity.
FIG. 3 is a diagram showing a few of the catalytic reactions that metal complexes with phosphorus ligands catalyze.
FIG. 4 is a ³¹P NMR spectrum (¹H coupled) of compound 1 with a *rac:meso* ratio of about 30:1.
FIG. 5 is a ³¹P NMR spectrum (¹H coupled) of *meso*-3.
FIG. 6 is a ³¹P NMR spectrum (¹H coupled) of compound 7.

### DETAINED DESCRIPTION OF THE INVENTION

Generally, the invention provides a method of synthesising a diazaphosphacycle.

Variables used in the chemical formulas are understood to be used consistently throughout. For example, R¹ is used to refer to the same groups unless otherwise specifically noted.

The phrase "diazaphosphacycles" refers to a cyclic compound that includes one phosphorus atom and two nitrogen atoms as ring members. The phrase "diazaphospholane" refers to a five membered ring that includes one phosphorus atom and two nitrogen atom ring members. A diazaphospholane is a type of a diazaphosphacycle.

A reaction or method run in the "substantial absence of oxygen" means that the reaction is carried out using standard methodology known to those skilled in the art of working with air-sensitive compounds. This does not require the complete absence of O₂ only the absence of enough oxygen so that oxygen does not interfere with the desired reaction. Common procedures for performing a reaction or method in the substantial absence of oxygen include, but are not limited to the use of Schlenk techniques, the use of glove bags or glove boxes, and the use of solvents from which most, if not all, of the oxygen has been removed using standard techniques such as by bubbling an inert gas through the solvent or by freeze-pump-thaw techniques known to those skilled in the art. A reaction performed in the substantial absence of oxygen is generally conducted under an inert atmosphere such as under a N₂ or argon atmosphere.

Generally, a reference to a certain element such as hydrogen or H is meant to include all isotopes of that element. For example, a compound having the structure R-PH₂ is defined to include those compounds where one or both of the H atoms bonded to the P atom is replaced by a deuterium atom, a tritium atom, or both. An exception to the general definition that reference to a certain element is meant to include all isotopes of that element is when the element is referred to with respect to NMR spectroscopy or a deuterated solvent used in conjunction with NMR spectroscopy.

A wavy line drawn through a line in a structural formula indicates point of attachment of a group.

A wavy line drawn between an atom and a group in a structural formula indicates that a bond exists between the atom and the group, but that the position of the group is not specified. For example a wavy bond between an alkene carbon atom and a group may be used to represent cis and trans isomers, and a wavy bond from an alkyl carbon to a group indicates that no stereochemistry is assigned and the wavy bond may thus be used to represent both S and R configurations at the alkyl carbon.

The acronym "COD" refers to 1,5-cyclooctadiene.

The acronym "NBD" refers to 2,5-norbornadiene also known as bicyclo[2.2.1]hepta-2,5-diene and norbornadiene.

The phrase "unsubstituted alkyl" refers to alkyl groups that do not contain heteroatoms. Thus the phrase includes straight chain alkyl groups such as methyl, ethyl, propyl, butyl, pentyl, hexyl, heptyl, octyl, nonyl, decyl, undecyl, dodecyl and the like. The phrase also includes branched chain isomers of straight chain alkyl groups, including but not limited to, the following which are provided by way of example: -CH(CH₃)₂, -CH(CH₃)(CH₂CH₃), -CH(CH₂CH₃)₂, -C(CH₃)₃, -C(CH₂CH₃)₃, -CH₂CH(CH₃)₂, -CH₂CH(CH₃)(CH₂CH₃), -CH₂CH(CH₂CH₃)₂, -CH₂C(CH₃)₃, -CH₂C(CH₂CH₃)₃, -CH(CH₃)CH(CH₃)(CH₂CH₃), -CH₂CH₂CH(CH₃)₂, -CH₂CH₂CH(CH₃)(CH₂CH₃), -CH₂CH₂CH(CH₂CH₃)₂, -CCH₂C(CH₃)₃, -CH₂CH₂C(CH₂CH₃)₃, -CH(CH₃)CH₂CH(CH₃)₂, -CH(CH₃)CH(CH₃)CH(CH₃)₂, -CH(CH₂CH₃)CH(CH₃)CH(CH₃)(CH₂CH₃), and others. Thus, the phrase unsubstituted alkyl groups includes primary alkyl groups, secondary alkyl groups; and tertiary alkyl groups. Preferred unsubstituted alkyl groups include straight and branched chain alkyl groups having 1 to 20 carbon atoms. More preferred such unsubstituted alkyl groups have from 1 to 10 carbon atoms while even more preferred such groups have from 1 to 6 carbon atoms. Most preferred unsubstituted alkyl groups include straight and branched chain alkyl groups having from 1 to 3 carbon atoms and include methyl, ethyl, propyl, and - CH(CH₃)₂.

The phrase "substituted alkyl" refers to an unsubstituted alkyl group as defined above in which one or more bonds to a carbon(s) or hydrogen(s) are replaced by a bond to non-hydrogen and non-carbon atoms such as, but not limited to, a halogen atom in halides such as F, Cl, Br, and I; an oxygen atom in groups such as hydroxyl groups, alkoxy groups, aryloxy groups, and ester groups; a sulfur atom in groups such as thiol groups, alkyl and aryl sulfide groups, sulfone groups, sulfonyl groups, and sulfoxide groups; a nitrogen atom in groups such as amines, amides, alkylamines, dialkylamines, arylamines, alkylarylamines, diarylamines, N-oxides, imides, and enamines; a silicon atom in groups such as trialkylsilyl groups, dialkylarylsilyl groups, alkyldiarylsilyl group, and triarylsilyl groups; a phosphorus atom in groups such as phosphines, and phosphoryls; and other heteroatoms in various other groups. Substituted alkyl groups also include groups in which one or more bonds to a carbon(s) or hydrogen(s) atom is replaced by a bond to a heteroatom such as oxygen in carbonyl, carboxyl, and ester groups; nitrogen in groups such as imines, oximes, hydrazones, and nitriles. Substituted alkyl groups include, among others, alkyl groups in which one or more bonds to a carbon or hydrogen atom is/are replaced by one or more bonds to fluorine atoms. Other alkyl groups include those in which one or more bonds to a carbon or hydrogen atom is replaced by a bond to an oxygen atom such that the substituted alkyl group contains a hydroxyl, alkoxy, aryloxy, or heterocyclyloxy group. Still other substituted alkyl groups include alkyl groups that have an amine group.

The phrase "unsubstituted alkenyl" refers to an "unsubstituted alkyl" group as defined above where at least one single C-C bond of the unsubstituted alkyl group is replaced by a double bond.

The phrase "substituted alkenyl" has the same meaning with respect to unsubstituted aryl groups that substituted alkyl groups has with respect to unsubstituted alkyl groups.

The phrase "unsubstituted cycloalkyl" refers to a cycloalkyl group where none of the carbon atoms of the cycloalkyl ring is bonded to an element other than H except for the carbon atom(s) bonded as the point of attachment. Examples of unsubstituted cycloalkyl groups include cyclopropyl, cyclobutyl, cyclopentyl, cyclohexyl, cycloheptyl, and cyclooctyl groups. Cyclohexyl and cyclopentyl groups are preferred cycloalkyl groups.

The phrase "substituted cycloalkyl" has the same meaning with respect to unsubstituted cycloalkyl groups that substituted alkyl groups have with respect to unsubstituted alkyl groups. However, a substituted cycloalkyl group also includes cycloalkyl groups in which one or more ring carbon atoms of the cycloalkyl group is bonded to a substituted and/or unsubstituted alkyl group. Thus, the phrase "substituted cycloalkyl" includes, but is not limited to methylcyclohexyl, and chlorocyclopentyl groups among others.

The phrase "unsubstituted aryl" refers to aryl groups that are not substituted. Thus the phrase includes, but is not limited to, groups such as phenyl, biphenyl, anthracenyl, naphthenyl, and xanthenyl by way of example. Although the phrase "unsubstituted aryl" includes groups containing condensed rings such as naphthalene, it does not include aryl groups that have other groups such as alkyl or halo groups bonded to one of the ring members as aryl groups such as tolyl are substituted aryl groups. A preferred unsubstituted aryl group is phenyl. Unsubstituted aryl groups may be bonded to one or more atom in the parent structural formula.

The phrase "substituted aryl group" has the same meaning with respect to unsubstituted aryl groups that substituted alkyl groups have with respect to unsubstituted alkyl groups. However, a substituted aryl group also includes aryl groups in which one or more aromatic carbons of the aryl group is bonded to a substituted and/or unsubstituted alkyl group. Thus, the phrase "substituted aryl" includes, but is not limited to tolyl, and hydroxyphenyl among others.

All ranges recited herein include all combinations and subcombinations included within that range's limits. For example, a temperature range of from about 20°C to about 65°C includes ranges of from 20°C to 60°C, of from 25°C to 30°C, of from 25°C to 28°C, and of from 20°C to 30°C, etc. Furthermore, one skilled in the art will recognize that any listed range can be easily recognized as sufficiently describing and enabling the same range being broken down into at least equal halves, thirds, quarters, fifths, tenths, etc. As a nonlimiting example, each range discussed herein can be readily broken down into a lower third, middle third, and upper third.

An acid chloride refers to a compound having at least one carboxylic acid group where the -OH group of the carboxylic acid moiety is replaced with a halogen group such as, but not limited to, -Cl or-Br. A diacid dichloride is a type of acid chloride and refers to a compound having at least two carboxylic acid groups where the -OH groups have been replaced with halogen groups. Examples of diacid dichlorides include, but are not limited to, oxalyl chloride, phthaloyl dichloride, and phthaloyl dibromide.

A method of synthesizing a diazaphosphacycle includes reacting a phosphine with a diimine and optionally one or more equivalents of an acid halide, a sulfonyl halide, a phosphoryl halide, or an acid anhydride in the substantial absence of O₂ to form the diazaphosphacycle. The phosphine has the formula I 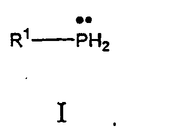 R¹ is selected from substituted or unsubstituted aryl groups, substituted or unsubstituted alkyl groups, substituted or unsubstituted alkenyl groups, substituted or unsubstituted cycloalkyl groups, or substituted or unsubstituted ferrocenyl groups. Preferred R¹ groups include substituted and unsubstituted phenyl groups and substituted and unsubstituted cycloalkyl groups such as, but not limited to substituted and unsubstituted cyclopentyl groups and cyclohexyl groups. Other preferred R¹ groups include one or more -PH₂ group such that the phosphine is a polyphosphine. Employing a polyphosphine in the method provides for the production of bidentate ligands. Examples of suitable polyphosphines for use in the methods of the invention include, but are not limited to, 1,2-diphosphinoethane, 1,2-diphosphinoethylene, 1,3-diphosphinopropane, substituted or unsubstituted 1,2-diphosphinobenzene groups, substituted or unsubstituted 1,8-diphosphinoanthracene groups, substituted or unsubstituted 1,8-diphosphino-9,10-dihydroanthracene groups, substituted or unsubstituted 1,8-diphosphinoxanthene groups, or 1,1'-diphosphinoferrocene groups.

The reaction of a diimine with a phosphine of formula I is preferably conducted in a solvent such as, but not limited to, a substantially deoxygenated ether such as diethyl ether or tetrahydrofuran; a substantially deoxygenated alcohol such as ethanol or methanol; substantially deoxygenated water; or substantially deoxygenated dichloroethane. An acid is preferably present when the diimine reacts with the phosphine of formula 1. Examples of suitable acids include, but are not limited to hydrochloric acid and hydrobromic acid.

Although not required, in certain preferred methods according the invention, the diimine and the phosphine are reacted in the presence of the optional acid halide, the sulfonyl halide, the phosphoryl halide, or the acid anhydride. The presence of one of the optional halides or anhydride provides for carboxylation, phosphorylation, or sulfonylation of one or both of the N atoms in diazaphosphacycle ring. In some preferred embodiments, the method is conducted in the presence of an acid halide such as, but not limited to acetyl chloride, acetyl bromide, phthaloyl dichloride, or phthaloyl dibromide. In other preferred embodiments, the reaction is conducted in the presence of a diacid dihalide such as phthaloyl dichloride or phthaloyl dibromide. In still other preferred embodiments, the reaction of the diimine with the phosphine is conducted in the presence of an acid anhydride.

The reaction between the diimine and the phosphine is typically conducted at temperatures ranging from less than 0°C to about 50°C. More preferably, the reaction is conducted at temperatures ranging from at or about 0°C to at or about 25°C.

Scheme 1 shows how various 3,4-diazaphosphacycles may be synthesized from simple starting materials to provide a large number of chiral phosphine ligands.

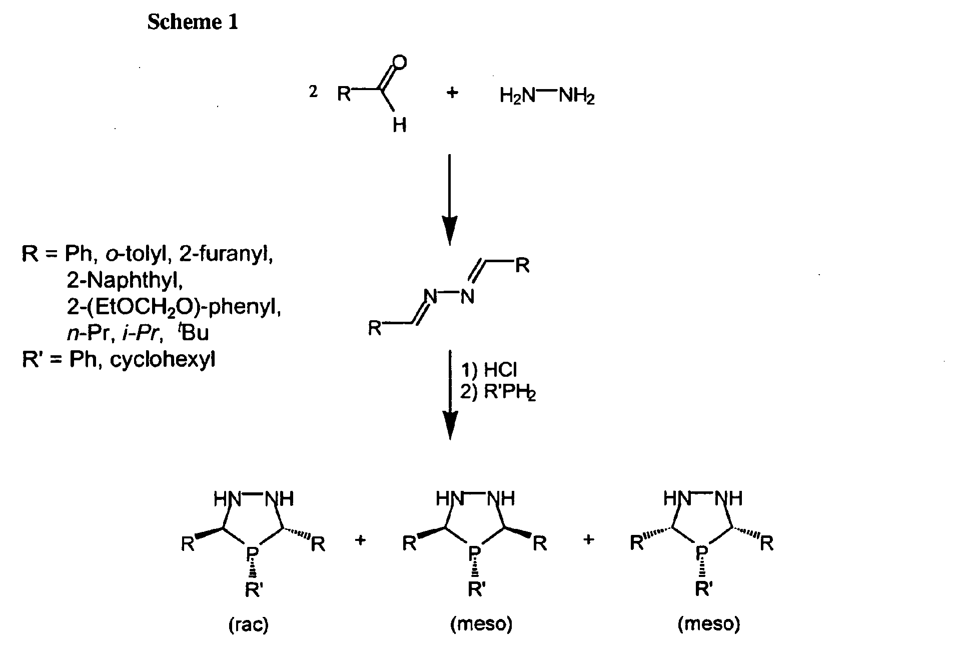

As shown in Scheme 1, the reaction of 2 equivalents of an aldehyde such as aldehydes where R is an alkyl group or aryl group with a diamine such as hydrazine readily affords the diimines for use in the method for producing the diazaphosphacycles. An excess of aldehyde may be used to produce the diimine.
The reaction shown in Scheme 1 may be carried out in a *rac* selective manner. The reaction typically provides high yields in excess of 80 percent of the 3,4-diazaphospholanes.

Scheme 2 shows the synthesis of numerous different diazaphosphacycles from simple and readily available diimines and phosphines. The diimine is formed from hydrazine and the appropriate aldehyde.

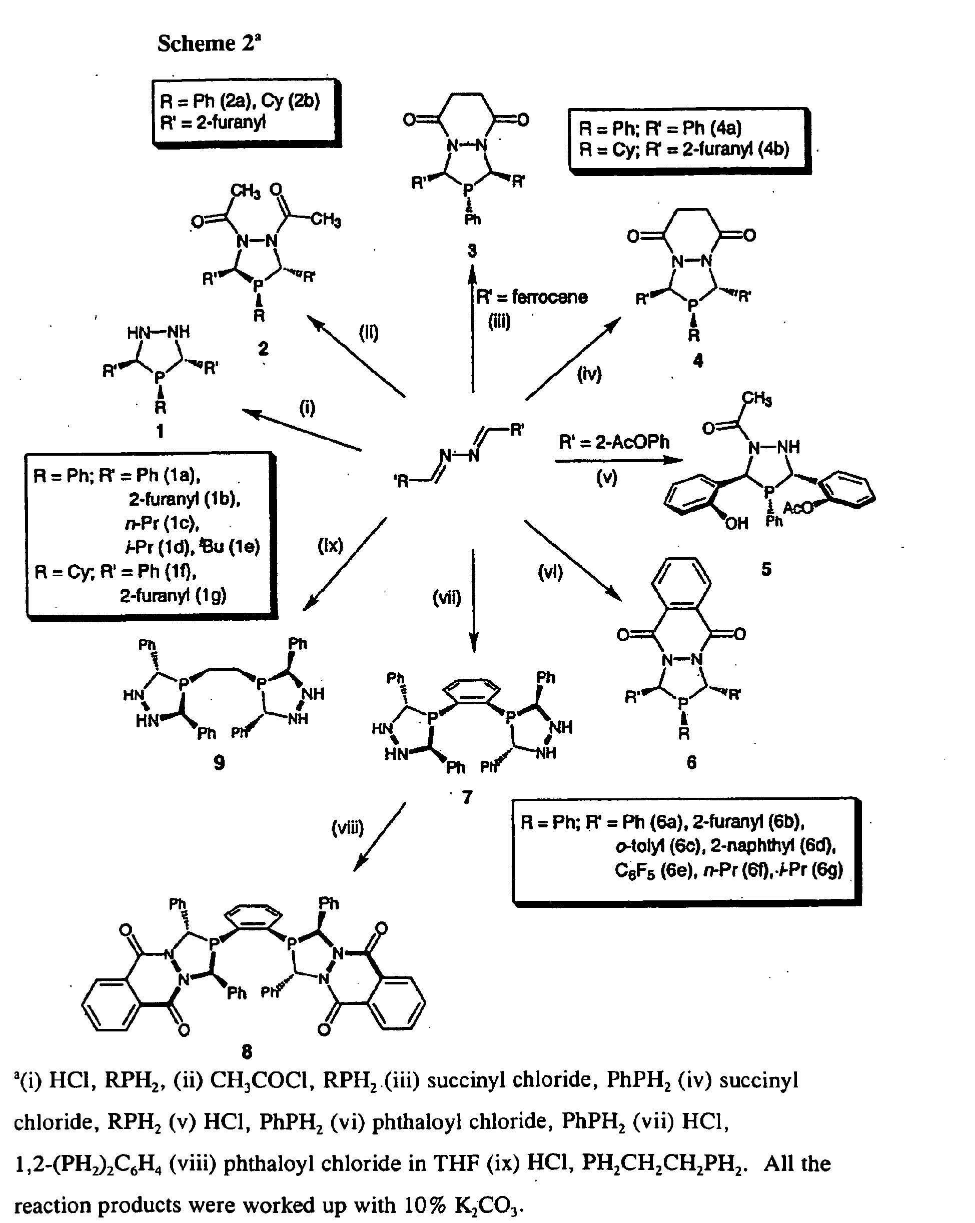

The condensation of azines (R²-CH =N-N = CH-R³), where R² and R³ are independently selected from substituted and unsubstituted aryl groups, substituted and unsubstituted alkyl groups, substituted and unsubstituted cycloalkyl groups, substituted and unsubstituted heterocyclyl groups, and substituted and unsubstituted ferrocenyl groups, prepared by the reaction of hydrazine with 2 equivalents of the corresponding aldehyde, as shown in Scheme 1, and primary phosphines yields diazaphosphacycles such as compound 1. As set forth in Scheme 2, this procedure surprisingly and unexpectedly provides a variety of 3,4-diazaphospholanes in good yields (25-95 %) and *rac* selectivity under mild reaction conditions.

Condensation of an azine and a primary phosphine preferably with 1 equivalent of dry HCl as an acid promoter affords simple 3,4-diazaphospholanes (1, 7, 9). In preferred embodiments, acid chlorides are employed and function as both promoters and N-functionalization reagents to provide N,N'-dicarboxyl-3,4-diazaphospholanes (2, 3, 4, 6) directly in a one-step synthesis as illustrated in Scheme 2. Reaction of the azine derived from acetyl salicylaldehyde with phenylphosphine yielded 5, a product in which one of the salicyl acetyl groups was transferred to the hydrazine moiety. As exemplified by the transformation of compound 7 to compound 8, 3,4-diazaphospholanes and acid chlorides react cleanly to provide a wide variety of N,N'-dicarboxyl-3,4-diazaphospholanes. The N,N'-dicarboxyl-3,4-diazaphospholanes exhibit higher thermal and chemical stability than simple 3,4-diazaphospholanes, although both are suitable for forming transition metal complexes.

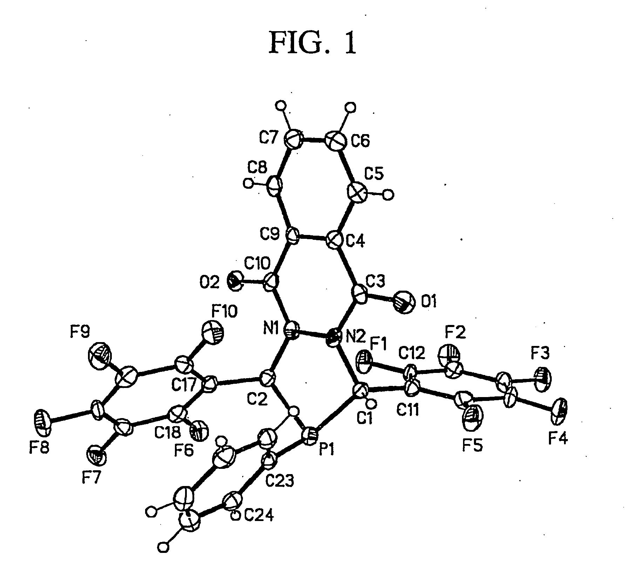

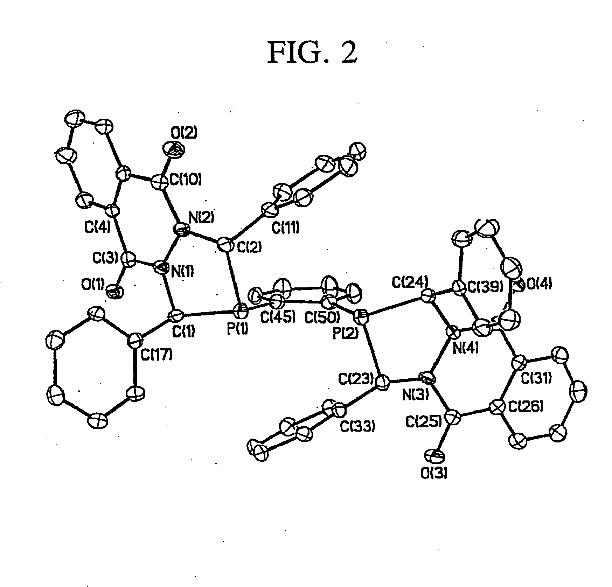

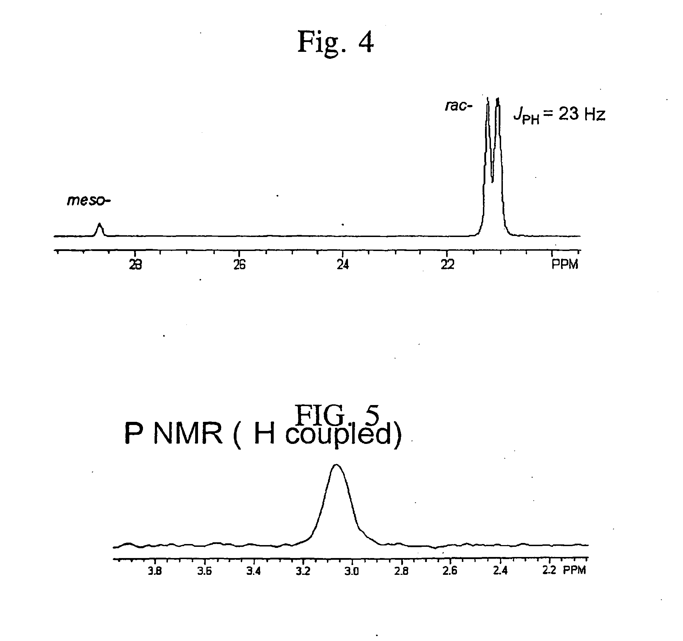

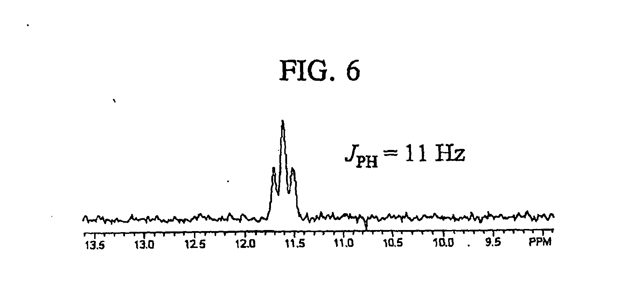

Acid-promoted addition of primary phosphines to diimines are generally *rac* selective, but the reaction is sensitive to the selection of the R¹ group of the phosphine and to the selection of the R² and R³ groups of the diimine used. For example, where R¹ is phenyl, *rac*/*meso* ratios (0.6-30: 1) are dependent on the choice of R¹ and R³. However, when R¹ is a cyclohexyl group, then formation of the *rac* isomers are highly preferred and in some cases are the only isomers observed. Azines derived from bulky, electron withdrawing substituents such as pentafluorophenyl and ferrocenyl generally yield low *rac*/*meso* ratios (6e, 2:1; 3, 0.6:1). For most diazaphospholanes, simple recrystallization provides separation of diastereomers (e.g., *rac*/*meso* ratios 30:1 for 1a). The diazaphosphacycles were characterized by X-ray crystallography and ¹H and ³¹P NMR spectroscopy as shown in FIGS. 1, 2, and 4-6.

Resolution of enantiomeric mixtures may be accomplished by various methods known to those skilled in the art. Resolution of racemic diazaphospholanes 1a, 1e, and 9 was accomplished by N-functionalization with di-O-methyl-L-tartaric acid dichloride to form bicyclic diastereomers followed by chromatographic separation on silica gel.

Scheme 3 shows how various functionalized 3,4-diazaphospholanes may be prepared from a diimine.

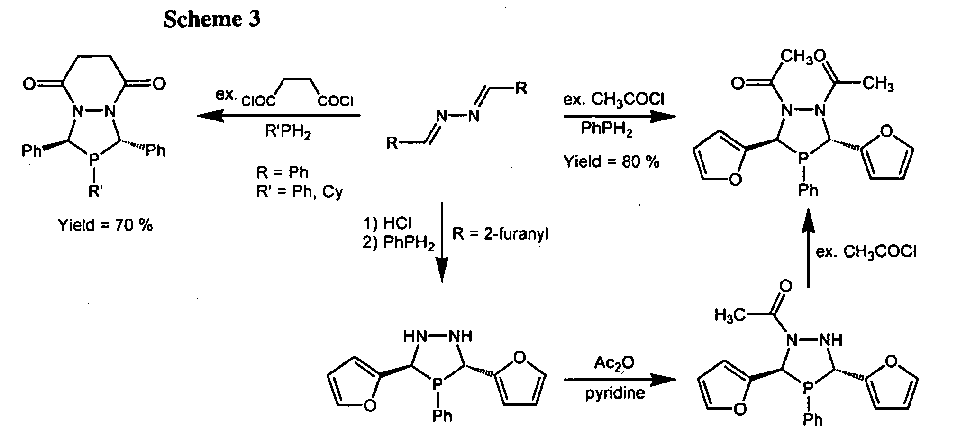

Scheme 4 shows a synthetic route for obtaining rigid bicyclic 3,4-diazaphospholanes from a diimine.

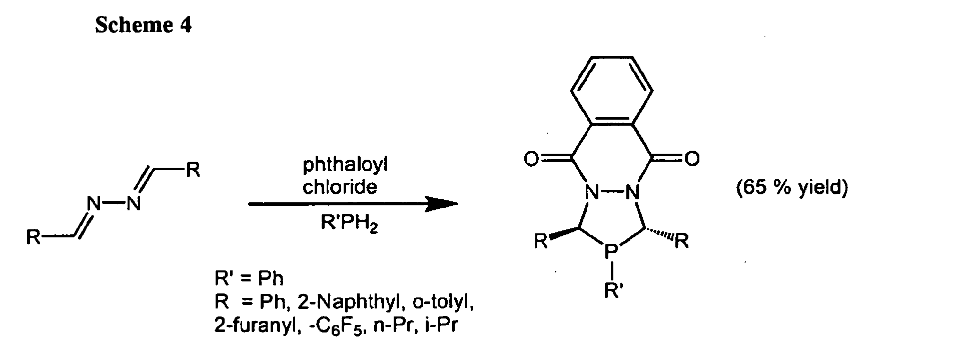

Scheme 5 shows a synthetic method that may be used for preparing a diazaphosphacycle that includes a hydroxyphenyl group.

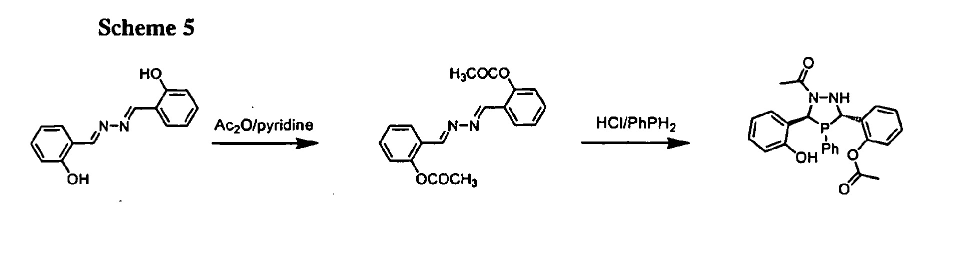

Scheme 6 shows a synthetic method for preparing a sterically demanding diazaphosphacycle that includes two ferrocenyl groups. As can be seen in Scheme 6, one of the products is thermally unstable and can be degraded.

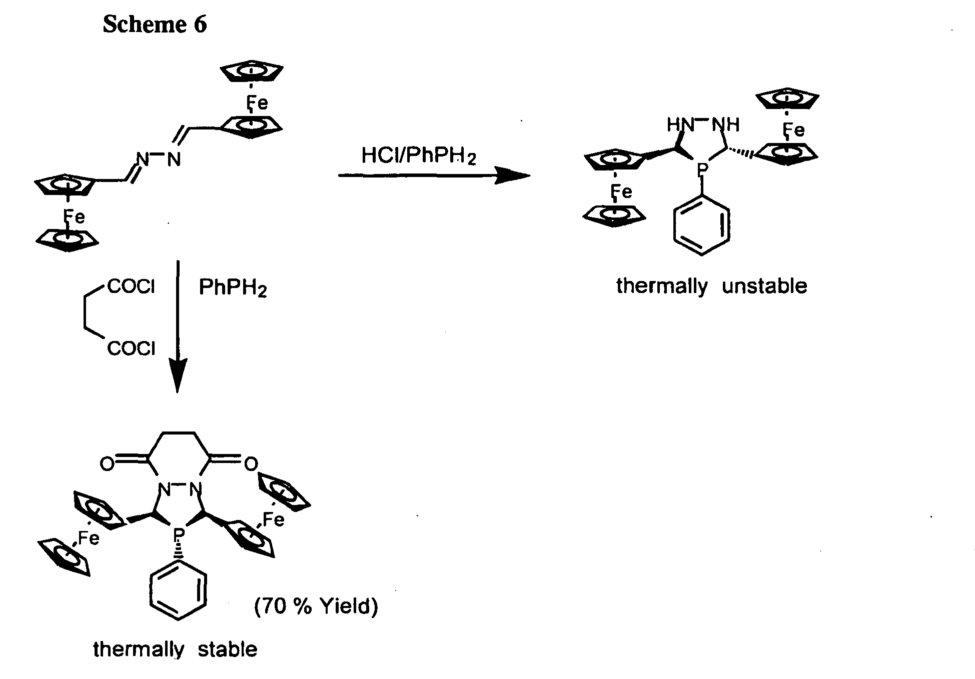

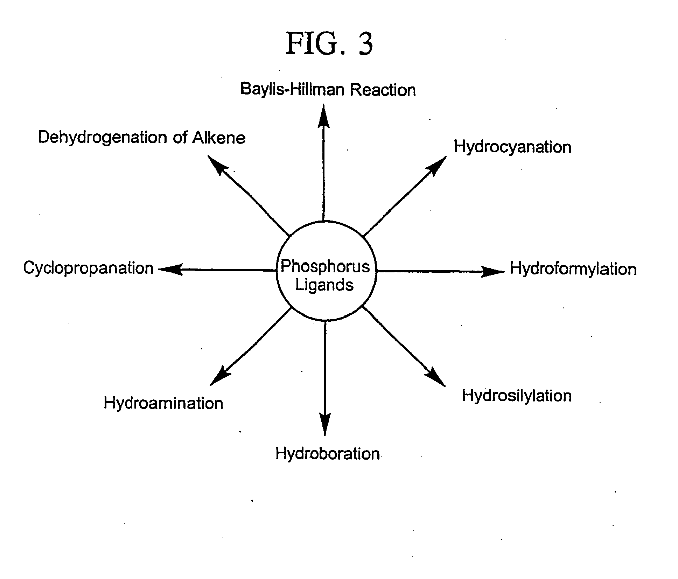

The diazaphosphacycles of the present invention may be combined with a transition metal to form a transition metal complex. The transition metal complexes include a transition metal and a diazaphosphacycle where at least one phosphorus atom in the diazaphosphacycle is bonded to the transition metal. Preferred metal complexes are prepared using 3,4-diazaphospholanes. Preferred transition metals in transition metal complexes include Rh, Ru, Pd, Pt, Ir, Ni, Co, and Fe. Other preferred transition metal complexes have catalytic activity and can be used to catalyze transformations such as those carried out with known transition metal complexes as understood by those skilled in the art. Just a few of the catalytic transformations possible with the transition metal complexes of the present invention are shown in FIG. 3.

Because the methods of the present invention may be used to readily synthesize a plethora of diazaphosphacycles, libraries of these compounds and transition metal complexes prepared from them may be formed.

Various methods may be used to prepare transition metal complexes from the diazaphosphacycles prepared according to the present invention. Such methods include reacting a diazaphosphacycle with a starting transition metal complex to produce the diazaphosphacycle transition metal complex. In such reactions, the starting transition metal complex typically includes at least one ligand that is replaced by the diazaphosphacycle during the reaction. Examples of ligands include phosphines; amines; diamines; CO; Cl, Br; nitriles such as, but not limited to acetonitrile and benzonitrile; 1,5-cyclooctadiene, norbornadiene, and other dienes; alkenes; ketones; alcohols; ethers; thiols; and sulfoxides. For example, excess diazaphospholanes 6a and 6b react with 1/2[{Rh(NBD)Cl}₂] affording adducts with the formula [(6)Rh(NBD)Cl] in quantitative yields. Similarly, reaction of the N, N'-phthaloyl derivative of 9 with [(COD)Pt(CH₃)₂] in solution yields [(9-phthaloyl)Pt(CH₃)₂] in quantitative yield as judged by NMR spectroscopy and X-ray crystallography. X-ray crystallography was used to generate ORTEP diagrams of various metal complexes as seen in FIGS. 14, 15, and 16. ¹H and ³¹P NMR spectra of various metal complexes are shown in FIGS. 7, and 9-13.

Standard reaction conditions known to those skilled in the art may be used to promote formation of the transition metal complex. For example, CO displacement may be promoted through the use of ultraviolet irradiation or by reaction with trimethylamine N-oxide as known by those skilled in the art.

Scheme 7 shows methods for preparing Rh(norbornadiene) complexes that include one or two diazaphosphacycles that may be prepared according to the present invention.

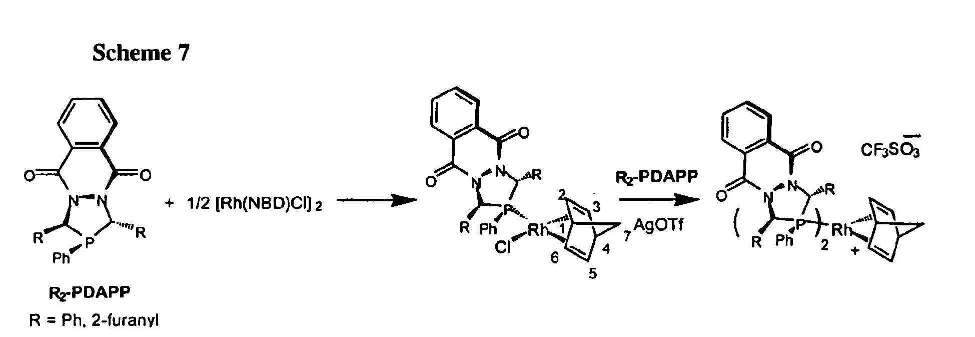

Scheme 8 shows various platinum complexes that have been synthesized using various diazaphosphacycles that may be prepared according to the present invention

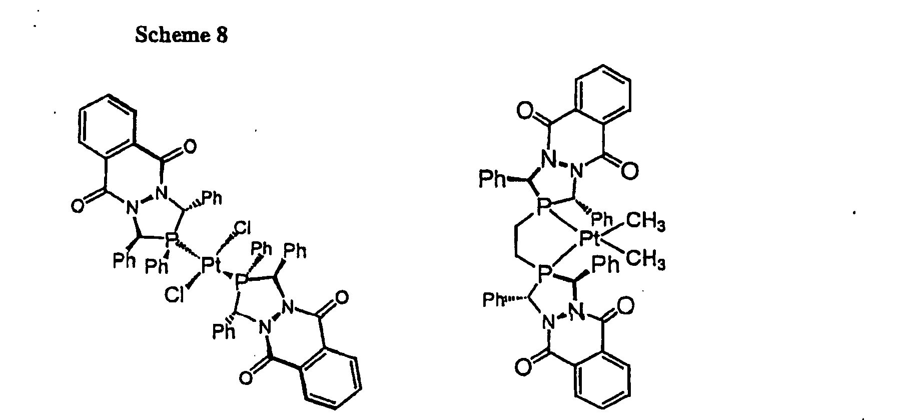

Scheme 9 show various synthesized rhodium complexes that include the diazaphosphacycles that may be prepared according to the present invention.

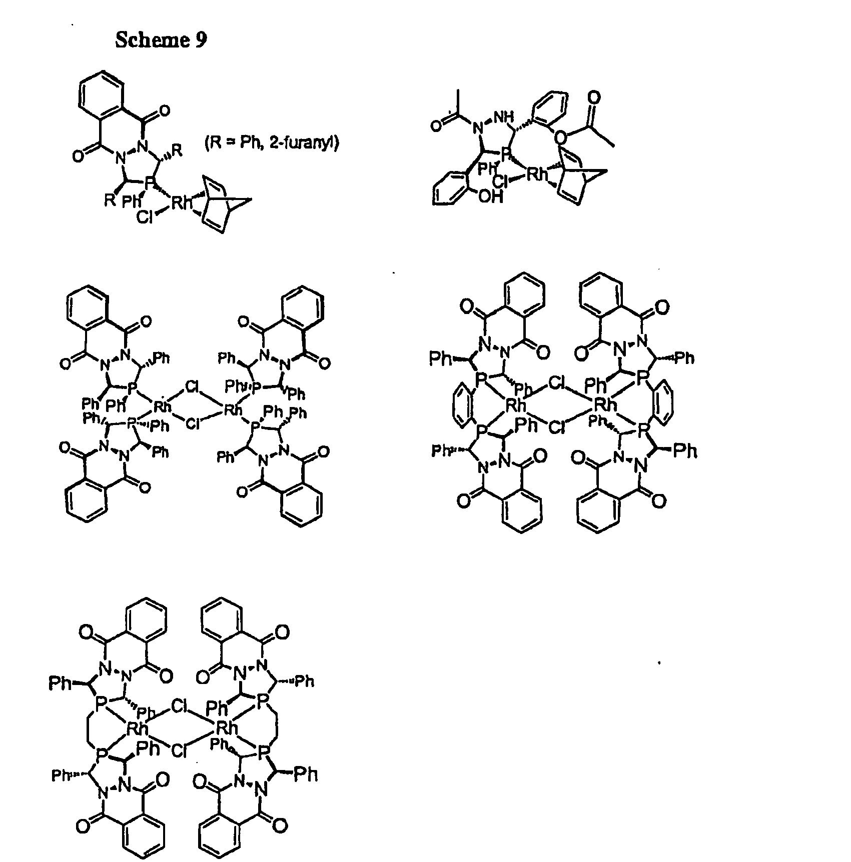

Scheme 10 shows a number of palladium complexes that have been synthesized using various diazaphosphacycles that may be prepared according to the present invention.

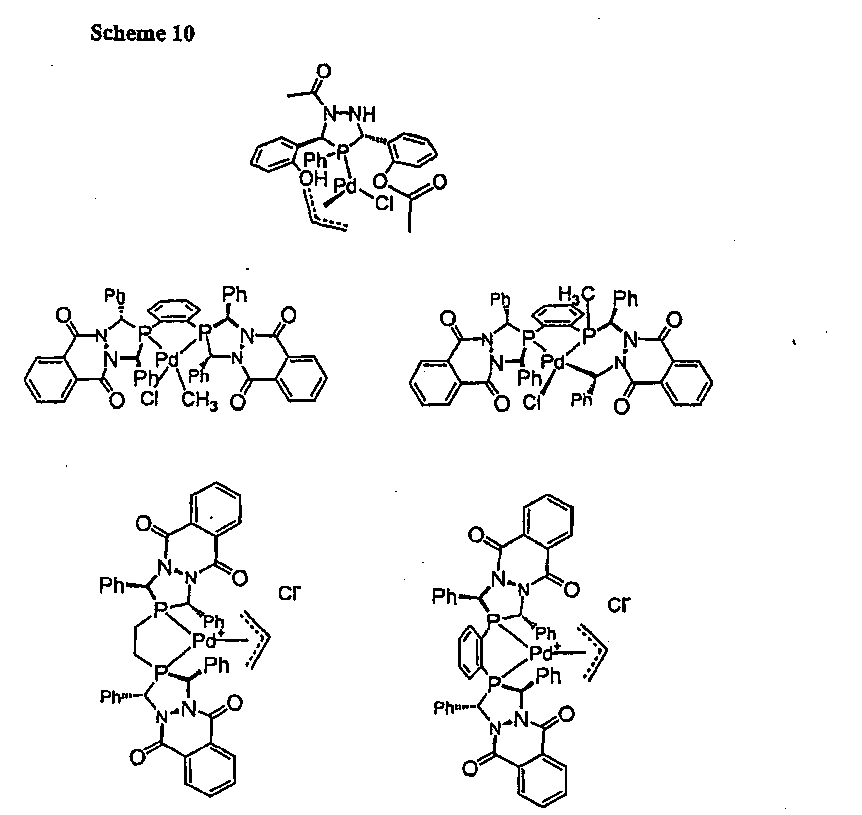

As noted above, there are many different types of reaction catalyzed by transition metal complexes. Examples of such reactions that may be catalyzed by the transition metal complexes prepared according to the present invention include, but are not limited to, alkene, alkyne, ketone, imine, oxime, aldehyde, nitrile, arene, carboxylic acid, ester, acid anhydride, and nitro group hydrogenations; hydrogenolysis reactions of alkyl halides, alkenyl halides, and acyl halides; hydrosilylation of alkenes, alkynes, ketones, and oximes; hydroboration of alkenes, alkynes, ketones, and oximes; hydroamination of alkenes and alkynes; hydroformylation of alkenes; hydroacylation of alkenes; hydrocarboxylation, hydroesterification, and hydrocarboxamidation of alkenes; carbonylation and double carbonylation of alkyl, aryl, and alkenyl halides; hydrocyanation of alkenes, dienes, and alkynes; alkene metathesis; cycloaddition of alkenes, dienes, and alkynes; cyclopropanation of alkenes; alkene and alkyne isomerization; Tischenko disproportionation of aldehydes; aziridination of alkenes; cross-coupling reactions; diborylation of alkanes; dehydrogenation of alkanes; allylic alkylation; allylic amination; allylic esterification; and amination and etherification of alkenyl and aryl halides. While each of the catalytic reactions is separately preferred, hydrogenation and hydroformylation reactions are particularly preferred transformations where transition metal complexes prepared from the diazaphosphacycles of the present invention may be utilized. Especially preferred catalytic transformations include those where enantioselectivity is desired.

As a general rule, 3,4-diazaphospholanes are bulky ligands. For example, the cone angle of 1a (172°) is comparable to that of tricyclohexylphosphine (170°). The bulkiness of the 3,4-diazaphosphacycles allows for the formation of transition metal complexes with crowded metal centers which may be associated with improved selectivity and/or activity during catalysis. Accordingly, diazaphosphacycles having cone angles greater than 170° are preferred.

### EXAMPLES

### General Considerations

Routine NMR characterization experiments, ¹H NMR (300 and 500 MHz). ¹³C NMR (75.462 and 125.7 MHz), ¹⁹F NMR (282 MHz), and ³¹P NMR (121.49 and 202.4 MHz) were carried out on a Bruker AC-300 or a Varian 500 NMR spectrometer. ¹H NMR data are reported as follows: chemical shift (multiplicity (b = broad, s = singlet, d = doublet, t = triplet, q = quartet, and m = multiplet), and integration). Chemical shifts for ¹H NMR spectra are reported in ppm downfield from internal tetramethylsilane (TMS, δ scale) using residual protons in the deuterated solvents (C₆D₆, 7.15 ppm; CDCl₃, 7.25 ppm; and CD₂Cl₂; 5.31ppm) as references. ¹³C and ³¹P NMR spectra were obtained using ¹H decoupling, and the chemical shifts are reported in ppm vs, Me₄Si (CDCl₃ at 77 ppm and C₆D₆ at 128 ppm) and 85 % H₃PO₄ standard (external), respectively. Elemental analyses were provided by Desert Analysis (Phoenix, AZ).

CDCl₃ solvents were purchased from Aldrich Chemical (Milwaukee, Wisconsin), distilled over calcium hydride, and vacuum transferred into an air-tight solvent bulb prior to transfer into an inert-atmosphere glovebag. All reactions were carried out under a dry nitrogen atmosphere using standard Schlenk techniques unless otherwise noted

Cyclohexyl phosphine and 1,2-bis(phosphino)ethane were purchased from Strem Chemicals, Inc. (Newburyport, Massachusetts) HCl (1.0 M in Et₂O solution), succinyl chloride, phthaloyl chloride, and diethyl L-tartrate were purchased from Aldrich Chemical of Milwaukee, Wisconsin. Acetyl chloride was purchased from J. T. Baker (Phillipsburg, New Jersey).

The aryl azine derivatives (aryl-CH=N-N=CH-aryl) were prepared by reaction of the corresponding aldehyde (2 equiv.) with hydrazine under refluxing alcohol conditions. F. E. Hencoch, G. Hampton, C. R. Hauser, J. Am. Chem. Soc. 1969, 91, 676-681. The alkyl azine derivatives (alkyl-CH=N-N=CH-alkyl) (A. U. Blackham, N. L. Eatough, J. Am. Chem. Soc. 1962, 84, 2922-2930),phenylphosphine (R. C. Taylor, R. Kolodny, D. B. Walters, Synthesis in Inorganic and Metal-Organic Chemistry 1973, 3, 175-179), and o-bis(phosphino)benzene (E. P. Kyba, S.-T. Liu, R. L. Harris, Organometallics 1983, 2, 1877-1879) were prepared according to known literature methods. Phenylphosphine is commercially available from Aldrich Chemical (Milwaukee, Wisconsin).

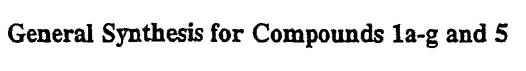

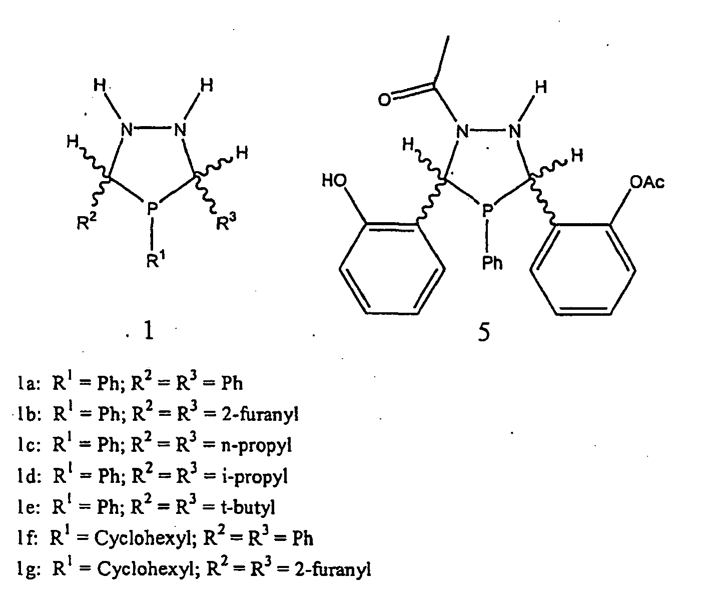

A diethyl ether (20 mL) solution of the appropriate azine derivative (4.55 mmol) was treated with HCl (ca. 4.75 mL, 4.75 mmol, 1.0 M in Et₂O solution) at 0°C. Immediately, a white solid precipitated from solution. Phenyl (or cyclohexyl for compounds 1f and 1g) phosphine (4.55 mmol) was added to this suspension at 0°C and the reaction mixture was stirred for 4 hours (or overnight) at room temperature. Into the resultant white slurry was added a degassed 10% aqueous K₂CO₃ (ca 30 mL) solution at 0°C. The ether layer was separated via cannula, dried over MgSO₄, and filtered via cannula to obtain a colorless solution. The ether was evaporated under vacuum to yield the corresponding diazaphospholanes.

***rac*-1a**: Yield = 67 % of a white solid (*rac*/*meso* = 13). ¹H NMR (CDCl₃): δ 4.53 (b, 2H, N*H*), 5.11 (d, *J*_{H-P} = 22.1 Hz, 1H, PC*H*M, 5.54 (s, 1H, PC*H*N), 6.77 (m, 2H, Ph), 6.98 (m, 3H, Ph), 7.10-7.39 (m, 10H, Ph); ¹³C{¹H} NMR (CDCl₃): δ 71.51 (d, *J*_{C-P} = 1.2 Hz, P*C*HN), 71.81 (d, *J*_{C-P} = 5.7 Hz, P*C*HN), 126.29 (d, *J*_{C-P} = 4.4 Hz, Ph), 126.37 (d, *J*_{C-P} = 1.3 Hz), 127.30 (s), 127.41 (s), 127.86 (s), 128.15 (d, *J*_{C-P} = 6.3 Hz), 128.94 (s), 128.98 (s), 133.34 (d, *J*_{C-P} = 18 Hz), 134.53 (s), 141.10 (d, *J*_{C-P} = 15.3 Hz), one quaternary carbon hasn't been assigned due to the overlap; ³¹P NMR (CDCl₃): δ 21.4 (d, *J*_{P-H} = 23 Hz). Analysis calculated for C₂₀H₁₉N₂P: C, 75.46; H, 6.02; N, 8.8. Found: C, 74.85; H, 6.09; N, 8.8.

***rac*-1b:** Yield = 90 % of a colorless oil (*rac*/*meso* = 10). ¹H NMR (CDCl₃): δ 4.0 (b, 1H, N*H*), 4.25 (b, 1H, N*H*), 4.84 (d, *J*_{H-P} = 22.8 Hz, 1H, PC*H*N), 5.24 (d, *J*_{H-P} = 2.2 Hz, 1H, PC*H*N), 5.63 (m, 1H, furan), 6.1 (dd, *J* = 1.8, 3.3 Hz, 1H, furan), 6.31 (m, 1H, furan), 6.36 (m, 1H, furan), 7.12 (m, 1H, furan), 7.33 (m, 5H, Ph), 7.42 (m, 1H, furan); ¹³C{¹H} NMR (CDCl₃): δ 64.46 (d, J = 20.3 Hz, PCHN), 65.55 (d, J = 24.8 Hz, PCHN), 106.28 (d, J = 3.2 Hz, furan), 107.13 (d, J = 7 Hz, furan), 110.04 (s, furan), 110.55 (s, furan), 128.33 (d, J = 7 Hz, Ph), 129.43 (s, Ph), 133.17 (d, J = 18.5 Hz, Ph), 141.23 (s, furan), 142.62 (s, furan), 148 01 (furan), 150.09 (s, furan), 153.26 (d, J = 14 Hz, Ph); ³¹P NMR (CDCl₃): δ 9.9 (d, *J*_{P-H} = 23 Hz). Analysis calculated for C₁₆H₁₅O₂N₂P: C, 64.43; H, 5.07; N, 9.39. Found: C, 64.59; H, 5.14; N, 8.70.

***rac*-1c:** Yield = > 90 % of a white solid (*rac*/*meso* = 5). ¹H NMR (CDCl₃): δ 0.82 (t, *J*_{H-H} = 7.3Hz, 3H, C*H*₃), 0.94 (t, *J*_{H-H} = 7.3Hz, 3H, C*H*₃), 1.3-1.7 (m, 8H, C*H*₂), 3.15 (doublet of tripet, *J*_{H-H} = 7.0Hz, *J*_{P-H} =16.2Hz, 1H, C*H*), 3.94 (t, *J*_{H-H} = 6.5Hz, 1H, C*H*), 3.3-3.6 (b, 2H, N*H* 7.34-7.41, (m, 3H, Ph), 7.47-7.55 (m, 2H, Ph); ¹³C{¹H} NMR (CDCl₃): δ 13.9 (s, CH₃), 21.5 (d, *J*_{P-C} = 12.0 Hz), 22.0 (d, *J*_{P-C} = 6.6Hz), 37.0 (d, *J*_{P-C}= 22.8Hz), 67.0 (d, *J*_{P-C} = 21.1Hz, P*C*HN), CH (δ67.3 (d, *J*_{P-C} = 17.0Hz, P*C*HN), 126.2 (d, *J*_{P-C} = 6 Hz, *Cₘₑₜₐ*), 127.0 (s, *C_{Para}*), 133.8 (d, *J*_{P-C} = 12 Hz, *Cₒᵣₜₕₒ*), 136.8 (d, *J*_{P-C} = 30 Hz, *Cᵢₚₛₒ*); ³¹p NMR (CDCl₃): δ 1.1 (b). Analysis calculated for C₁₄H₂₃N₂P(hexane)_{0.1}: C, 67.72; H, 9.5; N, 10.82. Found: C, 68.12; H, 8.94; N, 10.72.

***rac*-1d:** Yield = 70 % of a white solid with mainly a *rac* isomer. ¹H NMR (CDCl₃): δ 0.9-1.13 (m, 13H, C*H* and C*H*₃), 1.94 (m, 1H, C*H*, 2.81 (dd, *J*_{H-H} = 9.0 Hz, *J*_{P-H} = 26.4 Hz, 1H, PC*H*N), 3.82 (dd, *J*_{H-H} = 6.3Hz, *J*_{P-H} = 1.9Hz, 1H, PC*H*N), 3.2-3.6, (b, 2H, N*H*), 7.34-7.41, (m, 3H, Ph), 7.47-7.55, (m, 2H, Ph); ¹³C{¹H} NMR (C₆D₆): δ 20.7, (d, *J*_{C-P} = 13.7Hz, *C*H₃), 21.4, (d, *J*_{C-P} = 8.5 Hz, *C*H₃), 22.5 (d, *J*_{C-P} = 4.8Hz, *C*H₃), 23.5, (d, *J*_{C-P} = 21.4 Hz, *C*H₃), 28.4 (s), 31.9 (d, *J*_{C-P} = 20 Hz), 65.4 (d, *J*_{C-P} = 18 Hz), 67.5 (d, *J*_{C-P} = 32Hz), 77.1 (d, *J*_{C-P} = 18.1Hz, P*C*HN), 128.6 (d, *J*_{C-P} = 7 Hz, *Cₘₑₜₐ*), 129.1 (s, *Cₚₐᵣₐ*), 134.9 (d, *J*_{C-P} = 19 Hz, *Cₒᵣₜₕₒ*), 135.9 (d, *J*_{C-P} = 26 Hz, *Cᵢₚₛₒ*); ³¹P NMR (CDCl₃): δ -5.7 (d, *J*_{P-H} = 2.4Hz). Analysis calculated for C₁₄H₂₃N₂P(CH₂Cl₂)_{0.1}: C, 65.43; H, 9.04; N, 10.89. Found: C, 65.34; H, 8.61; N, 10.33.

***rac*-1e:** Yield = 61 % of a white solid (*rac*/*meso* = 6). ¹H NMR (CDCl₃): δ 0.75 (d, *J*_{H-P} = 1.1 Hz, 9H, C*H*₃), 1.04 (s, 9H, C*H*₃), 2.74 (d, *J*_{H-P} = 21.3 Hz, PC*H*N), 3.81 (d, *J*_{H-P} = 2.6 Hz, 1H, PC*H*N), 7.34 (m, 3H, Ph), 7.58 (m, 2H, Ph); ¹³C{¹H} NMR (CDCl₃): δ 28.11 (d, *J*_{C-P} = 8.6 Hz, *C*H₃), 29.27 (d, *J*_{C-P} = 4.9 Hz, *C*H₃), 33.05 (s, *C*CH₃), 33.78 (d, *J*_{C-P} = 15.9 Hz, *C*CH₃), 79.54 (d, *J*_{C-P} = 26.5 Hz, P*C*HN), 81.10 (d, *J*_{C-P} = 19 Hz, P*C*HN), 128.55 (d, *J*_{C-P} = 7.6 Hz, *Cₒᵣₜₕₒ*), 129.31 (s, *Cₚₐᵣₒ*), 135.13 (d, *J*_{C-P} = 19.7 Hz, *Cₘₑₜₐ*), 136.49 (d, *J*_{C-P} = 25.4 Hz, *Cᵢₚₛₒ*); ³¹P NMR (CDCl₃): δ -13.1 (d, *J*_{P-H} = 19.8 Hz). Analysis calculated for C₁₆H₂₇N₂P: C, 69.03; H, 9.78; N, 10.06. Found: C, 69.3; H, 9.77; N, 9.91.

***rac*-1f:** Yield = 58 % of a white solid with mainly a *rac* isomer. ¹H NMR (CDCl₃): δ 0.47 (m, 1H), 0.80 (m, 2H), 1.16-1.7 (m, 8H), 3.78 (b, 1H, N*H*), 4.14 (b, 1H, N*H*), 4.78 (s, 1H, PC*H*N), 4.85 (d, *J*_{H-P} = 19.1 Hz, 1H, PC*H*N), 7.22-7.40 (m, 8H, Ph), 7.47-7.50 (m, 2H, Ph); ¹³C{¹H} NMR (CDCl₃): 26.2 (s), 26.3 (d, *J*_{C-P} =12.8 Hz), 26.9 (d, *J*_{C-P} =7.7 Hz), 29.0 (d, *J*_{C-P} =8.3 Hz), 30.7 (d, *J*_{C-P} =19.5 Hz), 32.2 (d, *J*_{C-P} =21.6Hz,), 70.62 (d, *J*_{C-P} =3.2 Hz, P*C*HN), 71.0 (s, P*C*HN), 126.4 (d, *J*_{C-P} = 3.2 Hz, Ph), 126.8 (s, Ph), 127.4 (d, *J*_{C-P} = 1.3 Hz, Ph), 127.7 (d, *J*_{C-P} = 9.5 Hz, Ph), 128.4 (s, Ph), 128.8 (s, Ph), 136.4 (s, *C*CH), 140.4 (d, *J*_{C-P} =15.9Hz, *C*CH); ³¹P NMR (CDCl₃): δ 11.68 (m). Analysis calculated for C₂₀H₂₅N₂P: C, 74.05; H, 7.77; N, 8.64. Found: C, 74.4; H, 8.11; N, 9.67.

***rac*-1g:** Yield = 61 % of a white solid with mainly a *rac* isomer. ¹H NMR.(CDCl₃): δ 0.59 (m, 1H), 0.97 (m, 2H), 1.14-1.24 (m, 3H), 1.51-1.73 (m, 5H), 3.95 (b, 2H, N*H*), 4.74 (d, *J*_{H-P} = 3.3 Hz, 1H, PC*H*N), 4.82 (d, *J*_{H-P} = 22.8 Hz, PC*H*N), 6.23 (m, 1H), 6.29-6.35 (m, 3H), 7.37-7.39 (m, 2H); ¹³C{¹H} NMR (CDCl₃): δ 26.21 (s, CH₂), 26.47 (d, *J*_{C-P} =12.1 Hz), 26.75 (d, *J*_{C-P} = 8.3 Hz), 29.25 (d, *J*_{C-P} = 10.2 Hz), 30.35 (d, *J*_{C-P} =19.1 Hz), 33.07 (d, *J*_{C-P} = 30.0 Hz), 64.29 (d, *J*_{C-P} = 28.6 Hz, P*C*HN), 65.0 (d, *J*_{C-P} = 23.5 Hz, P*C*HN), 106.54 (d, *J*_{C-P} = 2.6 Hz, furan), 107.25 (d, *J*_{C-P} = 7.0 Hz, furan), 110.36 (s, furan), 110.63 (s, furan), 141.56 (s, furan), 142.52 (s, furan), 149.65 (s, P*C*CH), 153.11 (d, *J*_{C-P} = 20.4 Hz, P*C*CH), ³¹P NMR (CDCl₃): δ 15.6 (d, *J*_{P-H} = 21.3 Hz). Analysis calculated for C₁₆H₂₁N₂O₂P: C, 63.15; H, 6.96; N, 9.2. Found: C, 63.26; H, 7.11; N, 9.25.

***rac*-5:** Yield = 79 % of the crude product. X-ray quality crystals were grown from CH₂Cl₂/hexanes at room temperature. ¹H NMR (CDCl₃): δ 2.50 (s, 3H, C*H*₃), 2.51 (s, 3H, C*H*₃), 5.04 (d, *J* = 8.8 Hz, 1H, N*H*), 5.53 (dd, *J* = 17.3, 8.8, Hz, 1H, PC*H*N), 6.32 (d, *J* = 2.6 Hz, 1H, PC*H*N), 6.85-7.20 (m, 11H, Ph), 7.28 (m, 1H, Ph), 7.43 (m, 1H, Ph), 9.50 (b, 1H, O*H*); ¹³C{¹H} NMR (CDCl₃): δ 21.45 (s, *C*H₃), 21.77 (s, *C*H₃), 58.07 (d, *J*_{C-P} = 19.7 Hz, P*C*HN), 61.40 (d, *J*_{C-P} = 28.61 Hz, P*C*HN), 146.34 (s, Ph), 156.67 (d, *J*_{C-P} = 5.5 Hz, Ph), 168.96 (s, CO), 171.17 (s, CO); Peaks at 118-135 ppm have not been assigned due to the complexity. ³¹P NMR (CDCl₃): δ 14.6 (m). Analysis calculated for C₂₄H₂₃N₂O₄P(CH₂Cl₂)_{0.25}: C, 63.92; H, 5.2; N, 6.15. Found: C, 64.27; H, 4.96; N, 6.41.

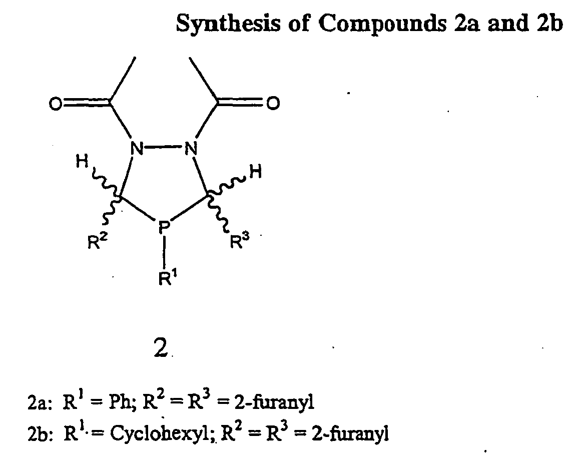

The appropriate azine (1.55 mmol) in Et₂O (50 mL) was treated with acetyl chloride (15.5 mmol, 10 equiv.) at 0°C. The appropriate phosphine (Phenylphosphine (2a); cyclohexylphosphine (2b)) (1.55 mmol) was then slowly added at 0°C, and the mixture stirred at room temperature overnight. To the resultant white slurry was added 10% aqueous K₂CO₃ (ca. 20 mL) at 0°C. For 2a, the aqueous and organic layers were filtered off via cannula to obtain a white solid which was then washed with distilled water and Et₂O. X-Ray quality crystals were obtained from CH₂Cl₂ and hexane at room temperature. For 2b, the ether layer was separated, dried over MgSO₄, and filtered off via cannula to obtain a colorless solution. The ether was then removed under reduced pressure to yield the corresponding diazaphospholane.

***rac*-2a:** Yield = 80 % with a white solid with a mainly *rac* isomer. ¹H NMR (CDCl₃): δ 1.71 (s, 3H, CH₃), 2.21 (s, 3H, CH₃), 5.9 (dd, *J* = 3.3, 1.8 Hz, 1H, furan), 6.03 (d, *J* = 3.3 Hz, 1H, furan), 6.30 (dd, *J* = 3.3, 1.8 Hz, furan), 6.44 (d, *J* = 3.3 Hz, 1H, furan), 6.55 (d, *J*_{H-P} = 23.2 Hz, 1H, NC*H*P), 6.72 (d, *J*_{H-P} = 3.3 Hz, NC*H*P), 6.74 (m, 1H, furan), 7.11-7.22 (m, 5H, Ph), 7.39 (m, 1H, furan); ¹³C{¹H} NMR (CDCl₃): δ 19.08 (s, *C*H₃), 20.68 (s, *C*H₃), 52.72 (d, *J*_{C-P} = 19.7 Hz, N*C*HP), 56.75 (d, *J*_{C-P} = 31.2 Hz, N*C*HP), 108.24 (d, *J*_{C-P} = 2.5 Hz, furan), 109.91 (s, furan), 110.53 (d, *J*_{C-P} = 10.2 Hz, furan), 110.83 (s, furan), 128.03 (d, *J*_{C-P} = 7.0 Hz, *Cₘₑₜₐ*), 129.38 (s, *Cₚₐᵣₐ*), 132.51 (d, *J*_{C-P} = 20.3 Hz, *Cₒᵣₜₕₒ*), 141.86 (s, furan), 143.51 (s, furan), 150.21 (d, *J*_{C-P} = 32.4 Hz, *Cᵢₚₛₒ*), 171.80 (s, CO), 174.75 (s, CO), two carbons are not assigned probably due to the overlap; ³¹P NMR (CDCl₃): δ 23.5 (d, *J*_{P-H} = 22.9 Hz). Analysis calculated for C₂₀H₁₉N₂O₄P: C, 62.83; H, 5.01; N, 7.33. Found: C, 62.91; H, 4.65; N, 7.21.

***rac*-2b:** Yield = 25 % a white solid with mainly a *rac* isomer. ¹H NMR (CDCl₃): δ 0.43 (m, 1H), 0.75-1.0 (m, 2H), 1.1-1.3 (m, 3H), 1.5-1.8 (m, 5H), 1.68 (s, 3H, C*H*₃), 2.22 (s, 3H, C*H*₃), 6.2-6.4 (m, 6H, furan and PC*H*N), 7.3-7.4 (m, 2H, furan); ¹³CH) NMR (CDCl₃): δ 19.42 (s, *C*H₃), 20.50 (s, *C*H₃), 26.00 (s), 26.29 (d, *J*_{C-P} = 2.6 Hz), 26.44 (d, *J*_{C-P} = 5.1 Hz), 29.13 (d, *J*_{C-P} = 19.1 Hz), 29.88 (d, *J*_{C-P} = 12.8 Hz), 32.39 (d, *J*_{C-P} = 19.1 Hz), 52.83 (d, *J*_{C-P} = 22.9 Hz, P*C*HN), 54.29 (d, *J*_{C-P} = 33.1 Hz, P*C*HN), 108.80 (s, furan), 110.27 (d, *J*_{C-P} = 9.5 Hz, furan), 110.72 (s, furan), 110.88 (s, furan), 142.15 (s, furan), 143.14 (s, furan), 149.56 (d, *J*_{C-P} = 3.2 Hz, furan), 150.75 (d, *J*_{C-P} = 26.71 Hz, furan), 173.15 (s, *C*O), 174.77 (s, CO); ³¹P NMR (CDCl₃): δ 27.0 (m). Analysis calculated for C₂₀H₂₅N₂O₄P: C, 61.85; H, 6.49; N, 7.21. Found: C, 62.18; H, 6.79; N, 7.30.

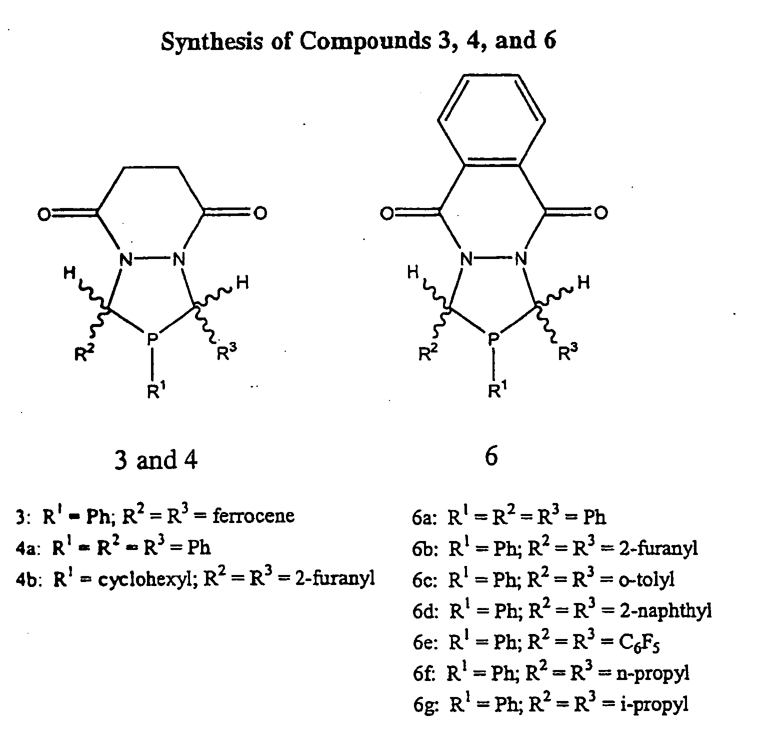

The appropriate azine (1.55 mmol) in Et₂O (50 mL) was treated with the diacid dichloride (4.65 mmol, 3 equiv.) at 0°C. The phosphine (1.55 mmol) was then slowly added at 0°C, and the mixture was stirred at room temperature overnight. To the resultant white slurry was added a 10% aqueous K₂CO₃ solution (ca. 20 mL) at ice-bath temperature. For 3, 4, 6a, 6b, and 6d, the aqueous and organic layers were filtered off via cannula to obtain a white solid. Subsequently, the product was washed with distilled water and Et₂O, and the residue was dried in vacuo to obtain an analytically pure product. For 6c, 6e, 6f and 6g, the ether layer was separated, dried over MgSO₄, and filtered off by cannula yielding the corresponding ether solution. The ether was removed *in vacuo* to obtain the desired product. Compounds 6 can also be made from the addition of corresponding compound 1 into a THF solution of phthaloyl chloride (3 equivalents) at ice-bath temperature. The mixture was stirred overnight at room temperature, placed under reduced pressure, washed with Et₂O and degassed water, and dried overnight to yield the corresponding compound 6.

***meso*-3:** Yield = 69 % of a reddish brown solid (*rac*/*meso* = 0.6). X-ray quality crystals of *meso-3* were grown from CH₂Cl₂/hexane at room temperature. ¹H NMR (CDCl₃): δ 2.50-2.6 (m, 2H, C*H*₂), 2.65-2.77 (m, 2H, C*H*₂), 3.88 (m, 2H, Cp), 4.0 (m, 2H, Cp), 4.04 (m, 2H), 4.14 (s, Cp, 10H) 4.30 (m, 2H, Cp), 6.04 (s, 2H, CHN), 7.45 (m, 5H, Ph); ¹³C{¹H} NMR (CDCl₃): δ 29.3 (s, *C*H₂), 59.4 (d, *J*_{C-P} = 24.2 Hz, P*C*HN), 67.73 (s, *C*H), 68.12 (s *C*H), 68.62 (d, *J*_{C-P} = 10.8 Hz, P*C*HN), 69.1 (s, Cp), 70.4 (d, *J*_{C-P} = 3.8 Hz, *C*H), 85.05 (d, *J*_{C-P} = 19.7 Hz, *C*CH),129.2 (d, *J*_{C-P} =6.4 Hz, *Cₘₑₜₐ*), 129.94 (s, *Cₚₐᵣₐ*), 130.8 (d, *J*_{C-P} = 15.8 Hz, *Cₒᵣₜₕₒ*), 134.2 (d, *J*_{C-P} = 23.5 Hz, *Cᵢₚₛₒ*), 165.2 (s, CO); ³¹P NMR (CDCl₃): δ 3.0 (s). Analysis calculated for C₃₂H₂₉N₂O₂Fe₂P(CH₂Cl₂)_{0.5} C, 59.63;H, 4.55; N, 4.21; Found: C, 60.19 (61.10); H, 4.60 (4.37); N, 4.36 (4.36).

***rac*-4a:** Yield = 95 % of the crude product with mainly a *rac* isomer. X-ray quality crystals were grown from CH₂Cl₂/hexanes at room temperature. ¹H NMR (CDCl₃): δ 2.83 (m, 4H, C*H*₂) 5.82 (d, *J*_{H-P} = 19.1 Hz, 1H, PC*H*N), 6.51 (s, 1H, PC*H*N), 6.71-6.75 (m, 2H, Ph), 6.9-7.05 (m, 5H, Ph), 7.1-7.2 (m, 2H,Ph), 7.25-7.30 (m, 1H, Ph), 7.30-7.38 (m, 3H, Ph), 7.42-7.46 (m, 2H, Ph); ¹³C NMR (CDCl₃): δ 29.46 (s, *C*H₃), 30.38 (s, *C*H₃), 57.14 (d, *J*_{C-P} = 21.0 Hz, P*C*HN), 61.72 (d, *J*_{C-P} = 31.8 Hz, P*C*HN), 124.79 (d, *J*_{C-P} =1.9 Hz, Ph), 125.41 (d, *J*_{C-P} = 8.3 Hz, Ph), 126.57 (s, Ph), 127.85 (s, Ph), 128.10 (d, *J*_{C-P} = 6.4 Hz, Ph), 129.07 (s, Ph), 129. 72 (s, Ph), 130.15 (d, *J*_{C-P} = 24.2 Hz, Ph), 132.20 (d, *J*_{C-P} = 19.0 Hz, Ph), 133.53 (s, Ph), 137.10 (d, *J*_{C-P} = 15.3 Hz, Ph), 165.24 (s, CO), 167.71 (s, CO), one peak is not assigned due to the overlap; ³¹P NMR (CDCl₃): δ 11.6 (m). Analysis calculated for C₂₄H₂₁N₂O₂P: C, 71.99; H, 5.29; N, 7.0. Found: C, 71.21; H, 5.29; N, 6.96.

***rac*-4b:** Yield = 59 % of the crude product with mainly a *rac* isomer. X-Ray quality crystals were grown from CH₂Cl₂/hexanes at room temperature. ¹H NMR (CDCl₃): δ 0.75 (m, 1H), 1.0 (m, 2H), 1.25 (m, 3H), 1.6 (m, 3H), 1.8 (m, 2H), 2.6-2.7 (m, 4H), 5.86 (d, *J*_{H,P} = 14.8 Hz, 1H, PC*H*N), 5.96 (s, PC*H*N), 6.26 (m, 1H, furan), 6.33 (d, *J*_{H,P} = 1.5 Hz, 1H, furan), 6.36 (dd, *J*_{H-P} = 1.9, 3.3 Hz, 1H, furan), 7.35 (m, 2H, furan); ¹³C{¹H} NMR (CDCl₃): δ 25.80 (d, *J*_{C-P} = 1.3 Hz), 26.51 (s), 26.47 (d, *J*_{C-P} = 20.3 Hz), 28.49 (d, *J*_{C-P} = 7 Hz), 29.47 (s), 29.76 (d, *J*_{C-P} = 22.9 Hz), 30.33 (s), 32.47 (d, *J*_{C-P} = 21. Hz), 50.25 (d, *J*_{C-P} = 24.2 Hz), 54.65 (d, *J*_{C-P} = 31.2 Hz), 107.16 (d, *J*_{C-P} = 2.5 Hz), 107.76 (d, *J*_{C-P} = 7 Hz), 110.62 (s), 110.94 (s), 141.73 (d, *J*_{C-P} = 1.3 Hz), 142.97 (s), 147.45 (d, *J*_{C-P} = 2.5 Hz), 150.21 (d, *J*_{C-P} = 17.2 Hz), 165.55 (s, CO), 167.59 (s, CO); ³¹P NMR (CDCl₃): δ 12.9 (m). Analysis calculated for C₂₀H₂₃N₂O₄P: C, 62.17; H, 6.0; N, 7.25. Found: C, 62.04; H, 5.52; N, 7.16.

***rac*-6a:** Yield = 65 % of a white solid with a *rac* isomer. X-ray quality crystals from grown from CH₂Cl₂/hexanes at room temperature. ¹H NMR (CDCl₃): δ 6.25 (d, 1H, *J*(H,P) = 19.5 Hz, PC*H*N), 6.95 (s, 1H, PC*H*N), 7.05 (m, 3H, Ph), 7.13-7.19 (m, 5H, Ph), 7.3-7.4 (m, 7H, Ph), 7.3-7.8 (m, 2H, CH), 8.44 (m, 1H, CH), 8.48 (m, 1H, CH), ¹³C{¹H} NMR (CDCl₃): δ 60.3 .(d, *J*_{C-P} = 19.7 Hz, PC*H*N), 64.9 (d, *J*_{C-P} = 31.8 Hz, PC*H*N), 125.10 (d, *J*_{C-P} = 3.2 Hz), 125.42 (d, *J*_{C-P} = 6.3 Hz), 126.88 (d, *J*_{C-P} = 1.9 Hz), 127.83 (s), 127.94 (s), 128.06(d, *J*_{C-P} = 2.6 Hz), 128.55 (d, *J*_{C-P} = 7.0 Hz), 129.33 (d, *J*_{C-P} = 1.3 Hz), 129.43 (s), 130.03 (s), 130.22 (s), 130.35 (s), 130.46 (s), 132.85 (d, *J*_{C-P} = 1.2 Hz), 132.93 9s), 133.188(s), 133.55 (d, *J*_{C-P} = 8.3 Hz), 137.2 (d, *J*_{C-P} = 14.6 Hz), 156.30 (s, CO), 156.50(s, CO); ³¹P NMR (CDCl₃): δ -1.3 (m). Analysis calculated for C₂₈H₂₁N₂O₂P: C, 74.99; H, 4.72; N, 6.25. Found: C, 75.21; H, 4.64; N, 6.32.

***rac*-6b:** Yield = 71 % of a white solid with mainly a *rac* isomer. X-ray quality crystals were grown from CH₂Cl₂/hexanes at room temperature. ¹H NMR (CDCl₃): δ 5.81 (m, 1H, furan), 6.09 (dd, J = 3, 2 Hz, 1H, furan), 6.32 (m, 1H, furan), 6.44 (m, 1H, furan), 6.47(d, *J*_{H-P} = 28 Hz, 1H, PC*H*N), 6.73 (d, *J*_{H-P} = 2 Hz, 1H, PC*H*N), 6.92 (m, 1H, furan); 7.3 (m, 5H, Ph), 7.35 (m, 1H, furan), 7.77 (m, 2H, CH), 8.22 (m, 1H, CH), 8.36 (m, 1H, CH); ¹³C{¹H} NMR (CDCl₃): δ 54.7 (d, *J*_{C-P} = 18 Hz, P*C*HN), 60.2 (d, *J*_{C-P} = 30 Hz, P*C*HN), 107.2 (d, *J*_{C-P} = 4 Hz, furan), 108.1 (d, *J*_{C-P} = 6 Hz, furan), 110.5 (s, furan), 110.8 (s, furan), 127.7 (s, CH), 127.8 (s, CH), 128.6 (d, *J*_{C-P} = 8 Hz, Ph), 129.3 (s, CC=O), 130.2 (d, *J*_{C-P} = 22 Hz, C*ᵢₚₛₒ*), 130.5 (s, CC=O), 130.8 (s, Ph), 133.1 (s, CH), 133.3 (d, *J*_{C-P} = 10 Hz, Ph), 133.5 (s, CH), 141.6 (s, furan), 143.3 (s, furan), 145.8 (s, furan), 149.2 (d, *J*_{C-P} = 13 Hz, furan), 156.3 (s, 2C, C=O); ³¹P NMR (CDCl₃): δ - 14.7 (b). Analysis calculated for C₂₄H₁₇N₂O₄P: C, 67.29; H, 4.0; N, 6.54. Found: C, 66.99; H, 3.76; N, 6.39.

***rac*-6c:** Yield =28% of a white solid (*rac*/*meso* = 11). ¹H NMR (CDCl₃): δ 2.46 (s, 3H, C*H₃*), 2.47 (s, 3H, C*H₃*), 5.98 (d, *J* = 9.3 Hz, 1H), 6.35 (d, *J*_{H-P} = 18 Hz, 1H, PC*H*N), 6.48 (t, *J* = 7 Hz, 1H), 6.79 (d, *J* = 7.5 Hz, 1H), 6.90 (s, 1H, PC*H*N), 6.85-7.3 (m, 10H), 7.84 (m, 2H, CH), 8.29 (m, 1H, CH), 8.39 (m, 1H, CH), How many H's; ¹³C{¹H} NMR (CDCl3): δ 20.4 (d, *J*_{C-P} = 4 Hz, *C*H₃), 20.6 (d, *J*_{C-P} = 7 Hz, *C*H₃), 59.0 (d, *J*_{C-P} = 20 Hz, P*C*HN), 62.8 (d, *J*_{C-P} = 32 Hz, P*C*HN), Peaks at 120-140 ppm have not been assigned due to the complexity; ³¹P NMR (CDCl₃): δ -13.9 (d, *J*_{P-H} = 17 Hz). Analysis calculated for C₃₀H₂₅N₂O₂P(CH₂Cl₂)_{0.5}: C, 70.59; H, 5.05; N, 5.40. Found: C, 70.93; H, 4.93; N, 5.42

***rac*-6d:** Yield (isolated) = 24 % of a white solid (*rac*/*meso* = 11). ¹H NMR (CDCl₃): δ 6.41 (d, *J*_{H-P} = 19 Hz, 1H, PC*H*N), 7.07 (s, 1H, PC*H*N), 8.30 (m, 1H, CH), 8.46 (m, 1H, CH), 7.0-8.0 (m, 22H); ¹³C{¹H} NMR (CDCl₃): δ 61.2 (d, *J*_{C-P} = 21 Hz, P*C*HN), 65.9 (d, *J*_{C-P} = 31 Hz, P*C*HN), Peaks at 120-140 ppm have not been assigned due to the complexity; ³¹P NMR (CDC13): δ -2.6 (d, *J*_{P-H} = 19 Hz). Analysis calculated for C₃₆H₂₅N₂O₂P: C, 78.82; H, 4.59; N, 5.11. Found: C, 78.21; H, 4.59; N, 5.19.

***rac*-6e:** Yield = 90 % of a yellow solid (*rac*/*meso* = 2). Recrystallization from hexane gave the pure *rac* isomer (38 %) and X-ray quality crystals of *rac*-**6e** were obtained from slow evaporation of a hexane solution. ¹H NMR (CDCl₃): δ 6.65 (d, *J*_{H-P} = 19.1 Hz, 1H, PC*H*N), 6.91 (d, *J*_{H-P} = 4.1 Hz, 1H, PC*H*N), 7.3 =7.4 (m, 5H, Ph), 7.8 (m, 2H), 8.28 (m, 1H), 8.34 (m, 1H); ¹³C{¹H} NMR (CDCl₃): δ 51.89 (d, *J*_{C-P} = 22.3 Hz, P*C*HN), 57.01 (d, *J*_{C-P} = 33.7 Hz, P*C*HN), 156.42 (s, CO), 156.58 (s, CO), peaks at 110-145 ppm have not been assigned due to the complexity. ³¹P NMR (CDCl₃): δ -2.7 (m). Analysis calculated for C₂₈H₁₁N₂F₁₀O₂P: C, 53.52; H, 1.76; N, 4.46. Found: C, 53.72; H, 2.01; N, 4.23.

***rac*-6f:** Yield = 80 % of a yellow oil (*rac*/meso =4). ¹H NMR (CDCl₃): δ 0.75 (t, *J*_{H-H}= 7 Hz, 3H C*H₃*), 0.92 (t, *J*_{H-H} = 7 Hz, 3H, C*H₃*), 1.5 (m, 4H, C*H₂*), 1.7 (m, 2H, CH₂), 1.9 (m, 2H, C*H₂*), 4.86 (ddd, *J*_{H-P} = 21 Hz, *J*_{H-H} = 12, 4 Hz, 1H, PC*H*N), 5.30 (dd, *J*_{H-H} = 9, 5 Hz, 1H, PC*H*N), 7.25-7.6 (m, 5H, aromatics), 7.6-8.1 (m, 2H, aromatics), 8.31 (m, 2H, aromatics); ¹³C NMR (CDCl₃): δ 14.4 (s, *C*H₃), 20.8 (d, *J*_{C-P} = 10 Hz, *C*H₂), 21.4 (d, *J*_{C-P} = 8 Hz, *C*H₂), 35.6 (s, *C*H₂), 35.8 (s, *C*H₂), 59.9 (d, *J*_{C-P} = 17 Hz, P*C*HN), 62.9 (d, *J*_{C-P} = 27 Hz, P*C*HN), 128.0 (s), 128.3 (s), 129.6 (d, *J*_{C-P} = 8 Hz), 131.6 (s), 134.0 (d, *J*_{C-P} = 12 Hz), 134.9 (s), 135.1 (s), A range of 120-140 ppm has not been assigned due to the complexity; ³¹P NMR (CDCl₃): δ -18.9 (b). Analysis calculated for C₂₂H₂₅N₂O₂P: C, 69.46; H, 6.62; N, 7.36. Found: C, 66.13; H, 4.96; N, 3.66.

***rac*-6g**: Yield = 49.9% of a white solid, prepared from the treatment of 1d and phthaloyl chloride in THF. ¹H NMR (CDCl₃): δ 0.41, (d, *J*_{H-H} = 7.1 Hz, 3H, C*H₃*), 0.95-1.06 (m, 9H, C*H₃*) 2.41, (oct, *J*_{H-H} = 6.8Hz, 1H-, C*H*Me₂), 3.13, (oct, *J*_{H-H} = 6.9Hz, 1H, C*H*Me₂), 4.94 (dd, *J*_{H-H} = 5.8 Hz, *J*_{P-H} = 20.4 Hz, 1H, PC*H*N), 5.32 (dd, *J*_{H-H} = 6.2Hz, *J*_{P-H} = 1.7Hz, 1H, PC*H*N), 7.30-7.45, (m, 3H), 7.60-7.68, (m, 2H), 7.79-7.89, (m, 2H), 8.30-8.44, (m, 2H); ¹³C{¹H} NMR (CDCl₃): δ 18.0 (d, *J*_{P-C} = 1.0 Hz, *C*H₃), 18.7 (d, *J*_{P-C} = 10.0 Hz, *C*H₃), 19.8, (d *J*_{P-C} = 8.86 Hz, *C*H₃), 20.2 (d, *J*_{P-C} = 10.0 Hz, *C*H₃), 22.5 (d, *J*_{P-C} = 4.8 Hz, *C*H₃), 23.5 (d, *J*_{P-C} = 21.4 Hz, *C*H₃), 65.7 (d, *J*_{P-C} = 17.6 Hz, P*C*HN), 67.8 d, *J*_{P-C} = 32.0 Hz, P*C*HN), 157.6 (s, *C*O), 156.7 (s, *C*O); peaks at 127.4-135.1 ppm have not been assigned due to the complexity. ³¹P NMR (CDCb): δ -25.7. Analysis calculated for C₂₂H₂₅N₂O₂P: C, 69.46; H, 6.62; N, 7.36. Found: C, 69.45 ; H, 6.31;N,7.42.

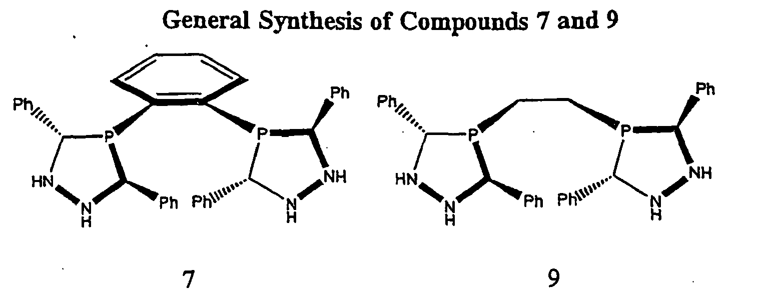

Phenyl azine (322.4 mg, 1.55 mmol) in Et₂O (50 mL) was treated with HCl (0.78 mL, 2M Et2O solution) at 0°C. The corresponding bis-phosphine (1,2-diphosphinobenzene (7); 1,2-diphosphinoethane (9)) (0.775 mmol) was then slowly added at 0°C, and the mixture was stirred at room temperature overnight. To the resultant white slurry was added a 10% aqueous K₂CO₃ solution (ca. 20 mL) at ice-bath temperature. The aqueous and organic layers were filtered off via cannula to obtain a white solid which was subsequently washed with distilled water and Et₂O. The white solid was dried overnight under vacuum to obtain analytically pure compound 7. X-ray quality crystals for *rac***-7** were grown from CH₂Cl₂ and hexanes at room temperature.

***rac*-7:** Yield = 32 % of a white solid. ¹H NMR (CDCl₃): δ 3.75 (dd, *J*_{H-H} = 6.6, 10.3 Hz, 2H, NH), 4.34 (t, *J*_{H-H} = 11.4 Hz, 2H, NH), 4.55 (d, *J*_{H}-H = 6.3 Hz, 2 H, PC*H*N), 4.71 (q, *J* = 11.7, 2H, PC*H*N), 6.63 (m, 4H), 6.80 (m, 4H), 6.94 (m, 2H), 7.23-7.40 (m, 14H); ¹³C{¹H} NMR (CDCl₃): δ 70.40 (t, *J*_{C-P}= 6.4 Hz, P*C*HN), 71.27 (t, *J*_{C-P} = 14.0 Hz, P*C*HN), 126.40 (t, *J*_{C-P} = 2.5 Hz), 126.58 (s), 127.47 (s), 128.75 (s), 129.24 (s), 131.72 (s), 134.98 (s), 141.08 (t, *J*_{C-P} = 8.3 Hz), 141.5 (s). Peaks at 127-128 ppm haven't been assigned due to the complexity. ³¹P NMR (CDCl₃): δ 11.6 (t, *J*_{P-H} = 10.7 Hz). Analysis calculated for C₃₄H₃₂N₄P₂: C, 73.11; H, 5.77; N, 10.03. Found: C, 73.05; H, 5.74; N, 10.1.

***rac*-9:** Yield = 32 % of a white solid. ¹H NMR (CDCl₃): δ 0.95 (m, 4H, CH2), 3.76 (dd, *J*_{H-H} = 7.0, 11.0 Hz, 2H, NH), 4.11 (t, *J* = 10.3 Hz, 2H, NH), 4.41 (d, *J*_{H-H} = 7.0 Hz, 2H, PC*H*N), 4.82 (q, *J* = 10.3 Hz, 2H, PC*H*N), 7_{.}28-7.40 (m, 6H, Ph), 7.50 (m, 4H, Ph); ¹³C{¹H} NMR (CDCl₃): δ 19.8 (d, *J*_{C-P} = 7 Hz, *C*H₂P), 69.7 (dd, *J*_{C-P} = 10.8, 14 Hz, P*C*HN), 73.3 (t, *J*_{C-P} = 11.4 Hz, P*C*HN), 126.1 (s), 126.7 (s), 127.44 (s), 127.6 (d, *J*_{C-} = 11z),128.5 (s), 128.83 (s), 136.4 (s, *Cipso*)*,* 139.9 (t, *J*_{C-P} = 8.3 Hz, *Cipso*); ³¹P NMR (CDCl₃): δ 15.8 (m). Analysis calculated for C₃₀H₃₂N₄P₂: C, 70.58; H, 6.32; N, 10.97. Found: C, 70.29; H, 6.31; N, 11.0.

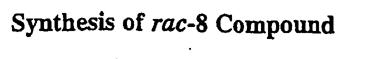

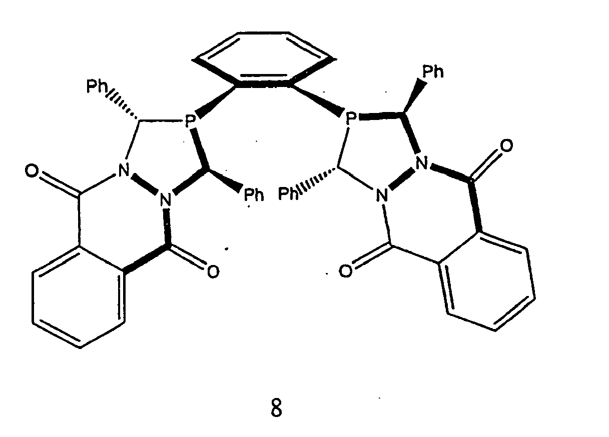

1,2-Bis(phosphino)benzene (0.2 mL, 1.55 mmol) was added to the ether solution of phenyl azine (648 mg, 3.1 mmol) and phthalolyl chloride (0.9 mL, 6.25 mmol) at 0°C. After the mixture stirred over night, an aqueous 10 % K₂CO₃ solution (30 mL) was added into the resultant white slurry at ice-bath temperature. The aqueous and ether layers were removed via cannula and the residue dried *in vacuo.* The residue was washed with THF and Et₂O (1:1 (v/v)) to obtain a white solid of *rac*-**8** in a 23 % yield. X-ray quality crystals were grown from CH₂Cl₂/hexanes at room temperature. In addition, *rac***-8** was made from the addition of *rac*-**7** into phthaloyl chloride in THF at 0°C. ¹H NMR (CDCl₃): δ 6.15 (t, *J*_{P-H} = 10.3 Hz, 2H, PC*H*N), 6.18 (s, 2H, PC*H*N), 6.96 (m, 4H), 7.1 (m, 4H), 7.17 (m, 2H), 7.3-7.4 (m, 14H), 7.8 (m, 4*H*), 8.2 (m, 2H, C*H*), 8.36 (m, 2H, C*H*); ¹³C{¹H} NMR (CDCl₃): δ 60.56 (s, P*C*HN), 65.75 (t, *J*_{C-P} = 18.5 Hz, P*C*HN), 156.86 (s, CO), 157.11 (s, CO), Peaks at 125-140 ppm haven't been assigned due to the complexity; ³¹P NMR (CDCl₃): δ -14.4 (t, *J*_{P-H} = 10.7 Hz). Analysis calculated for C₅₀H₃₆N₄O₄P₂(CH₂Cl₂)_{0.8}: C, 68.81; H, 4.27; N, 6.32. Found: C, 68.55; H, 4.37; N, 6.14.

### Resolution Procedure for Tartaric Acid Derivatives: Tart-1a, Tart-1e, and Tart-9

Di-O-methyl-tartaric acid was prepared according to the literature method. 1. Felner, K. Schenker, Helv. Chim. Acta. 1970, 53, 4, 754-762. The acid was converted to the acid chloride based loosely on literature procedure. T. Purdie, C. R. Young, J. Chem. Soc. 1910, 1532. The acid was slowly added to a slight excess of PCls in benzene at 0°C under nitrogen followed by stirring overnight. The resulting solution was filtered and solvent was *removed in vacuo* to yield a yellow solid. The solid was purified by sublimation. ¹H NMR (CDCl₃): 3.57 (s, 6H), 4.73 (s, 2H); ¹³C {¹H} NMR (CDCl₃): δ 60.5, 87.4, 169.3.

A THF solution of the acid chloride was added dropwise to a stirring THF solution of the diazaphospholane at room temperature. After stirring overnight, the THF was *removed in vacuo.* Ether was added to the resulting oil, and to the resulting solution was added aqueous 10 % K₂CO₃. The ether layer was dried over MgSO₄ and the ether was removed *in vacuo.* Resolution of the **Tart-9** diastereomers was accomplished on Aldrich silica preparative TLC plates (20cm x 20cm x 1mm) with a mobile phase of ethyl acetate/hexane. Both diastereomers were separately recovered. Resolution of **Tart-1a** and **Tart-1e** was accomplished by flash chromatography using a column packed with Silica Gel 60 (EM Science) and eluents of 15:1 and 30:1 CH₂Cl₂/ethyl acetate. One diastereomer of each was cleanly recovered. The other diastereomers each had unidentified impurities in ¹H and ³¹P NMR's. Absolute configurations of the resolved diastereomers are not currently known.

**Tart-9**: [Crude product has only 2 peaks in ³¹P NMR] (R_{f} = 0.17): ¹H NMR (CDCl₃): 0.95 (m, 4H, CH₂), 3.61 (s, 6H, OC*H*₃), 3.75 (s, 6H, OC*H*₃), 3.89 (d, *J*_{H-H} = 12 Hz, 2H, C*H*OCH₃), 4.27 (d, *J*_{H-H} = 12Hz, 2H, C*H*OCH₃), 5.56 (s. 2H, PC*H*N), 5.56 (d, *J*_{H-P} = 16 Hz, 2H, PC*H*N), 6.9-7.4 (m, 30H); ³¹P NMR (CDCl₃): δ 4.7 (m); (R_{f} = 0.28): ¹H NMR (CDCl₃): 3.41 (s, 6H, OC*H*₃), 3.61 (s, 6H, OC*H*₃), 3.88 (d, *J*_{H-H} = 3Hz, 2H, C*H*OCH₃) , 3.97 (d, *J*_{H-H} = 3Hz, 2H, C*H*OCH₃), 5.42 (d, *J*_{H-P} = 17Hz, 2H, PC*H*N), 5.57 (s, 2H, PC*H*N), 6.9-7.4 (m, 30H); ³¹P NMR (CDCl₃): δ 3.5 (m).

**Tart-1a**: [Crude product has two diastereomers as main products with several unidentified impurities] (R_{f} = 0.33): ¹H NMR (CDCl₃): 3.58 (s, 3H, OC*H₃*), 3.71 (s, 3H, OCH₃), 3.97 (d, *J*_{H-H} = 12Hz, 1H, C*H*OCH₃), 4.17 (d, *J*_{H-H} = 12Hz, 1H, C*H*OCH₃), 5.80 (d, *J*_{H-P} = 19Hz, 1H, PC*H*N), 6.38 (s, 1H, PC*H*N), 6.6-7.4 (m, 15H); ³¹P NMR (CDCl₃): δ 9.2 (m) with a trace of other impurities; (**R_{f} = 0.55**): ¹H NMR (CDCl₃): 3.47 (s, 3H, OC*H*₃), 3.57 (s, 3H, OC*H*₃), 3.86 (d, *J*_{H-H} = 4Hz, 1H, C*H*OCH₃), 4.00 (d, *J*_{H-H} = 4Hz, 1H, C*H*OCH₃), 5.71 (d, *J*_{H-P} = 19Hz, 1H, PC*H*N), 6.42 (s, 1H, PC*H*N), 6.6-7.5 (m, 15H); ³¹P NMR (CDCl₃): δ 8.5 (m).

**Tart-1e:** [Crude product has two diastereomers as main products with several unidentified impurities] (**R_{f} = 0.31**): ¹H NMR (CDCl₃): 0.84 (d, *J*_{H-P} = 1Hz, 9H, C(C*H*₃)₃), 0.98 (s, 9H, C(C*H*₃)₃), 3.51 (s, 3H, OC*H*₃), 3.53 (s, 3H, OC*H*₃), 3.86 (d, *J*_{H-H} = 3Hz, 1H, C*H*OCH₃), 3.94 (d, *J*_{H-H} = 3Hz, 1H, C*H*OCH₃), 4.58 (d, *J*_{H-P} = 21Hz, 1H, PC*H*N), 4.74 (d, *J*_{H-P} = 3Hz, 1H, PC*H*N), 7.2-7.7 (m, 5H); ³¹P NMR (CDCl₃): δ 1.4; (**R_{f} = 0.15**): ¹H NMR (CDCl₃): 0.78 (d, *J*_{H-P} = 1Hz, 9H, C(C*H*₃)₃), 0.96 (s, 9H, C(C*H*₃)₃), 3.68 (s, 3H, OC*H*₃), 3.72 (s, 3H, OC*H*₃), 3.99 (d, *J*_{H-H} = 11Hz, 1H, C*H*OCH₃), 4.25 (d, *J*_{H-H} = 11Hz, 1H, C*H*OCH₃), 4.53 (d, *J*_{H-P} = 21Hz, 1H, PC*H*N), 4.81 (d, *J*_{H-P} = 3Hz, PC*H*N), 7.2-7.7 (m, 5H); ³¹P NMR (CDCl₃): δ 4.8 plus one impurity with peak height ratio about 5:1 1 product to impurity at δ -6.2.

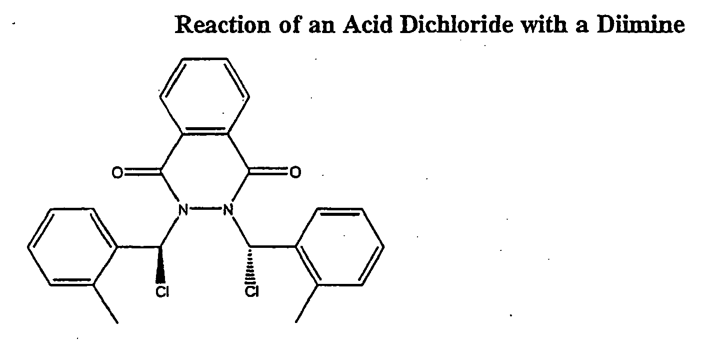

All manipulations were performed under a N₂ atmosphere and using standard Schlenk techniques.

Two equivalents of phthaloyl dichloride were added dropwise to a stirred ether solution of the azine (970 mg) formed by the reaction of equivalents of 2-methyl benzaldehyde with hydrazine. After stirring overnight, the solution was set aside. After 5 days, 100 mg of crystals had formed which were characterized using X-ray crystallographic analysis.

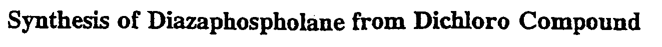

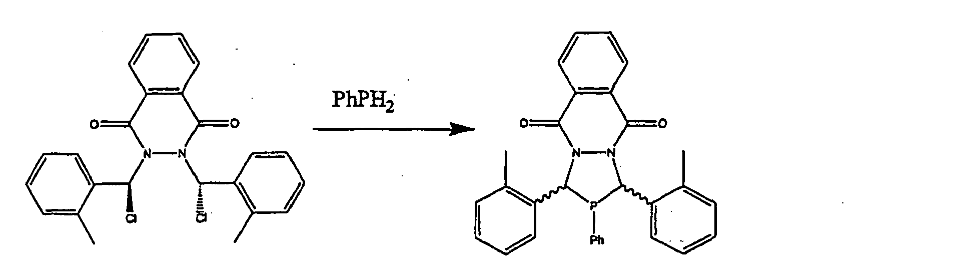

All manipulations were performed under N₂ using standard Schlenk techniques.

A solution of the azine (383 mg in 100 mL Et₂O) prepared from 2-methyl benzaldehyde and hydrazine was treated with 2 equivalents of phthaloyl dichloride and stirred overnight. Phenylphosphine (170 mg) was slowly added, and the solution was stirred overnight. To the resultant solution was added a 10 % aqueous solution of K₂CO₃ The ether layer was separated, dried over MgSO₄, and filtered using a glass frit. The ether was removed, and 400 mg of the diazaphospholane was obtained as a 10:1 *rac:meso* mixture.

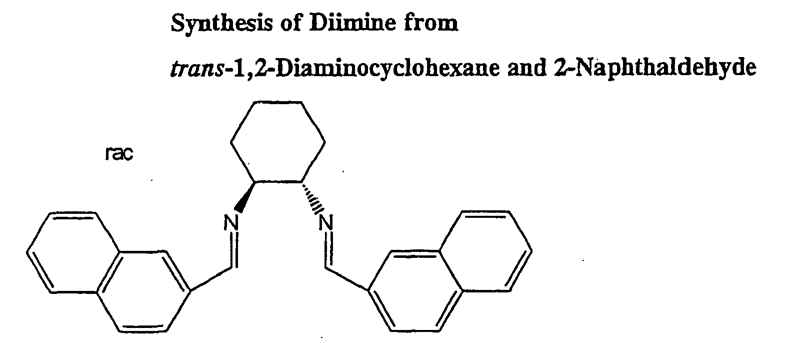

*Trans-*1,2-diaminocyclohexane (2.0 mL) was added dropwise to a stirred solution of two equivalents of 2-naphthaldehyde (8.2g in 100 mL benzene). After stirring for one hour, the solution was heated to 50°C for 30 minutes. The solvent was removed on a rotary evaporator. The resulting solid was redissolved in benzene and was then removed by rotary evaporation to azeotropically remove water. This procedure was repeated once more. The remaining solid was rinsed eight times with 25 mL of ether and filtered. The remaining solid was dried under vacuum for 15 minutes and was used without further purification (yield = 5.17g)

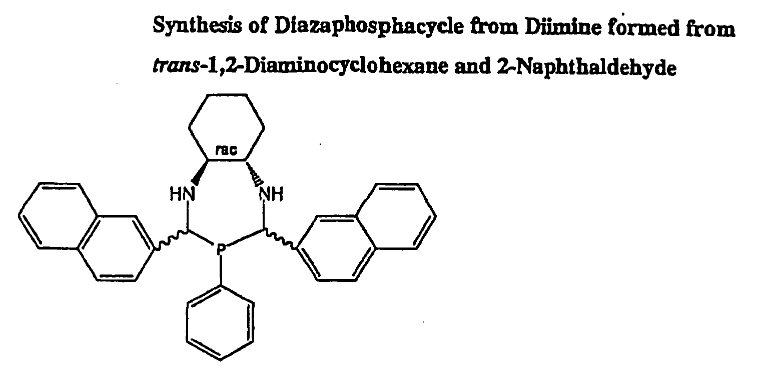

All manipulations were performed under N₂ using standard Schlenk techniques

Phenyl phosphine (0.3 mL) was added dropwise to a stirred solution of the diimine formed from *trans*-1,2-diaminocyclohexane and benzaldehyde (1.06g. in 100 mL THF). After 10 minutes, an HCl solution (1.36 mL of a 2M solution in ether) was added dropwise. The resulting solution was then stirred for 18 hours. THF was removed under vacuum and 75 mL of ether was added. A 10% aqueous solution of K₂CO₃ was added to the ether mixture and was stirred until all solid had gone into solution. The ether layer was separated, dried over MgSO₄, and filtered.
The ether was then removed under vacuum to yield a solid product (crude yield = 1.31 g) consisting of two diastereomers. ³¹P NMR (CDCl₃): δ 19, 9.

## Claims

1. A method of synthesizing a diazaphosphacycle, comprising: reacting a phosphine with a diimine and optionally one or more equivalents of an acid halide, a sulfonyl halide, a phosphoryl halide, or an acid anhydride in the substantial absence of O₂ to form the diazaphosphacycle, wherein the phosphine has the formula I 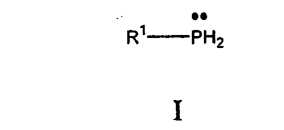 wherein,
R¹ is selected from the group consisting of substituted and unsubstituted aryl groups, substituted and unsubstituted alkyl groups, substituted and unsubstituted alkenyl groups, substituted and unsubstituted cycloalkyl groups, and substituted and unsubstituted ferrocenyl groups.

2. The method of claim 1, wherein the phosphine and the diimine are reacted in the presence of an acid.

3. The method of claim 1, wherein the phosphine and the diimine are reacted in the presence of phthaloyl dichloride or phthaloyl dibromide.

4. The method of claim 1, wherein R¹ comprises one or more -PH₂ groups such that the phosphine is a polyphosphine.

5. The method of claim 4, wherein the polyphosphine is selected from the group consisting of 1,2-diphosphinoethane, 1,2-diphosphinoethylene, 1,3-diphosphinopropane, substituted and unsubstituted 1,2-diphosphinobenzene groups, substituted and unsubstituted 1,8-diphosphinoanthracene groups, substituted and unsubstituted 1,8-diphosphino-9,10-dihydroanthracene groups, substituted and unsubstituted 1,8-diphosphinoxanthene groups, and substituted and unsubstituted 1,1'-diphosphinoferrocene groups.

6. The method of claim 1, wherein the phosphine, the diimine, and optionally the acid halide are reacted in a substantially deoxygenated solvent comprising an ether, an alcohol, water, dichloroethane, or combinations thereof.

## Patentansprüche

1. Verfahren zur Synthese eines Diazaphosphacyclus, umfassend das Umsetzen eines Phosphins mit einem Diimin und gegebenenfalls einem oder mehreren Äquivalenten eines Säurehalogenids, eines Sulfonylhalogenids, eines Phosphorylhalogenids oder eines Säureanhydrids im wesentlichen in Abwesenheit von O₂ unter Bildung des Diazaphosphacyclus, wobei das Phosphin die Formel I aufweist 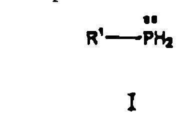 wobei
R¹ aus der Gruppe ausgewählt ist, die aus substituierten und unsubstituierten Arylgruppen, substituierten und unsubstituierten Alkylgruppen, substituierten und unsubstituierten Alkenylguppen, substituierten und unsubstituierten Cycloalkylgruppen und substituierten und unsubstituierten Ferrocenylg-ruppen besteht.

2. Verfahren nach Anspruch 1, wobei das Phosphin und das Diimin in Gegenwart einer Säure umgesetzt werden.

3. Verfahren nach Anspruch 1, wobei das Phosphin und das Diimin in Gegenwart von Phthaloyldichlorid oder Phthaloyldibromid umgesetzt werden.

4. Verfahren nach Anspruch 1, wobei R¹ eine oder mehrere -PH₂-Gruppen umfast, so dass es sich beim Phosphin um ein Polyphosphin handelt.

5. Verfahren nach Anspruch 4, wobei das Polyphosphin ausgewählt ist aus der Gruppe, die aus 1,2-Diphosphinoethan, 1,2-Diphosphinoethylen, 1,3-Diphophinopropan, substituierten und unsubstituierten 1,2-Diphosphinobenzolgruppen, substituierten und unsubstituierten 1,8-Diphosphinoanthracengruppen, substituierten und unsubstituierten 1,8-Diphosphino-9,10-dihydroanthracengruppen, substituierten und unsubstituierten 1,8-Diphosphinoxanthengruppen, und substituierten und unsubstituierten 1,1'-Diphosphinoferrocengruppen besteht.

6. Verfahren nach Anspruch 1, wobei das Phosphin, das Diimin und gegebenenfalls das Säurehalogenid in einem im wesentlichen desoxygenierten Lösungsmittel, das einen Ether, einen Alkohol, Wasser, Dichlorethan oder Kombinationen davon umfasst, umgesetzt werden.

## Revendications

1. Procédé de synthèse de composés diazaphosphacycliques, qui comporte le fait de faire réagir une phosphine avec une diimine et, en option, un équivalent ou plus d'un halogénure d'acide, d'un halogénure de sulfonyle, d'un halogénure de phosphoryle ou d'un anhydride d'acide, et ce pratiquement en l'absence d'oxygène, de manière à ce qu'il se forme un composé diazaphosphacyclique, dans lequel procédé la phosphine présente la formule I : 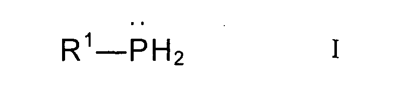 dans laquelle R¹ représente un entité choisie dans l'ensemble constitué par les groupes aryle avec ou sans substituant(s), alkyle avec ou sans substituant(s), alcényle avec ou sans substituant(s), cycloalkyle avec ou sans substituant(s), et ferrocényle avec ou sans substituant(s).

2. Procédé conforme à la revendication 1, dans lequel on fait réagir la phosphine et la diimine en présence d'un acide.

3. Procédé conforme à la revendication 1, dans lequel on fait réagir la phosphine et la diimine en présence de dichlorure de phtaloyle ou de dibromure de phtaloyle.

4. Procédé conforme à la revendication 1, dans lequel l'entité représentée par R¹ comporte un ou plusieurs groupes de formule -PH₂, de sorte que la phosphine est une polyphosphine.

5. Procédé conforme à la revendication 4, pour lequel la polyphosphine est choisie dans l'ensemble constitué par les suivantes : 1,2-diphosphino-éthane, 1,2-diphosphino-éthylène, 1,3-diphosphino-propane, 1,2-diphosphino-benzène avec ou sans substituant(s), 1,8-diphosphino-anthracène avec ou sans substituant(s), 1,8-diphosphino-9,10-dihydro-anthracène avec ou sans substituant(s), 1,8-diphosphino-xanthène avec
ou sans substituant(s), et 1,1'-diphosphino-ferrocène avec ou sans substituant(s).

6. Procédé conforme à la revendication 1, dans lequel on fait réagir la phosphine, la diimine et le cas échéant, l'halogénure d'acide dans un solvant pratiquement désoxygéné qui comprend un éther, un alcool, de l'eau
ou du dichloroéthane, ou une combinaison de tels solvants.
